# EUROPEAN PATENT APPLICATION

(11) **EP 3 643 459 A1**
(43) Date of publication of application: **29.04.2020**
(21) Application number: 17914209.6
(22) Date of filing: 21.06.2017
(51) Int. Cl.: B25J 15/08

(54) **MANIPULATOR AND ROBOT**

(71) Applicant: Saito Inventive Corp., Minamitsuru-Gun, Yamanashi 401-0304 (JP)
(72) Inventor: SAITO, Norihiko, Yamanashi 401-0304 (JP)
(74) Representative: Ablett, Graham Keith
(86) International application number: PCT/JP2017/022932
(87) International publication number: WO 2018/235214

(57) **Abstract**

A manipulator 1 contains a pressure receiving portion 4 containing an elastic layer 5 in which an outer surface 51 which is a pressure receiving surface and an inner surface 5b on an opposite side of the outer surface 5a are defined and a marker M which is disposed in the elastic layer 5 and displaced in association with deformation of the elastic layer 5 and a detection portion 6 which is positioned on the side of the inner surface 5b of the elastic layer 5 and detects external force applied to the elastic layer 5 on the basis of displacement of the marker M. Further, the marker M contains a first marker M1 and a second marker M2 which are disposed so as to be shifted in a thickness direction of the elastic layer 5 with each other.

## Description

### FIELD OF THE INVENTION

The present invention relates to a manipulator and a robot.

### BACKGROUND ART

Hitherto, there has been known a robot for assisting nursing care of a care receiver (e.s. an old person and a disability person) such as a robot described in a patent document 1. The robot of the patent document 1 includes two arms and is configured to insert the arms between a bed and the care receiver in a state that the care receiver lies down on the bed to lift up the care receiver from the bed. This makes is possible to carry the care receiver from the bed to a wheelchair or from the wheelchair to the bed.

### RELATED ART

### PATENT DOCUMENT

[Patent document 1] JP 2008-086542A

### SUMMARY OF INVENTION

### PROBLEMS TO BE SOLVED BY THE INVENTION

However, since a configuration of each arm of the robot of the patent document 1 is unclear, it cannot be considered that the arms can be smoothly inserted between the bed and the care receiver. Thus, for example, there is risk that the arms get caught by a bed sheet or a cloth of the care receiver or the arms push the care receiver with excessive force and thereby a problem that the arms cannot smoothly operate is caused.

An object of the present invention is to provide a manipulator and a robot which can smoothly operate.

### MEANS FOR SOLVING THE PROBLEMS

The above object is achieved by the present inventions defined in the followings.
(1) A manipulator, comprising:
   a pressure receiving portion containing an elastic layer in which a first surface which is a pressure receiving surface and a second surface on an opposite side of the first surface are defined and a marker which is disposed in the elastic layer and displaced in association with deformation of the elastic layer; and
   a detection portion which is positioned on the side of the second surface of the elastic layer and detects external force applied to the elastic layer on the basis of displacement of the marker.
(2) The manipulator according to the above (1), wherein the marker contains a first marker and a second marker which are disposed so as to be shifted in a thickness direction of the elastic layer with each other.
(3) The manipulator according to the above (2), wherein the elastic layer includes a first elastic layer having the first marker and a second elastic layer which is disposed on the first elastic layer and has the second marker.
(4) The manipulator according to the above (2) or (3), wherein the first marker and the second marker are different from each other in at least one of shape and hue.
(5) The manipulator according to any one of the above (1) to (4), wherein the marker contains an exposed marker which is exposed on the first surface.
(6) The manipulator according to any one of the above (1) to (5), wherein the pressure receiving portion includes a reference marker which is not displaced due to the deformation of the elastic layer and can be detected by the detection portion.
(7) The manipulator according to any one of the above (1) to (6), wherein the detection portion includes a photographing portion for photographing the marker and detects the displacement of the marker on the basis of image data of the marker photographed by the photographing portion.
(8) The manipulator according to any one of the above (1) to (7), wherein the detection portion detects the displacement of the marker using a stereo photographic method.
(9) The manipulator according to any one of the above (1) to (8), further comprising a support portion which supports the elastic layer from the side of the second surface.
(10) The manipulator according to the above (9), further comprising a movable portion which can be displaced with respect to the support portion and a pressure-sensitive element which can detect external force applied to the movable portion.
(11) The manipulator according to any one of the above (1) to (10), further comprising:
   a base portion, and
   a finger portion which is connected to the base portion and can be displaced with respect to the base portion,
   wherein the pressure receiving portion is disposed on at least a tip end portion of the finger portion.
(12) The manipulator according to any one of the above (1) to (11), wherein the marker includes a linear portion having a linear shape and a block portion disposed on the linear portion and having a width wider than a wide of the linear portion, and
   wherein a Young's modulus of the block portion is higher than a Young's modulus of the linear portion.
(13) A robot, comprising:
   the manipulator defined by any one of the above (1) to (12) .
(14) A robot, comprising:
   a pressure receiving portion containing an elastic layer in which a first surface which is a pressure receiving surface and a second surface on an opposite side of the first surface are defined and a marker which is disposed in the elastic layer and displaced in association with deformation of the elastic layer; and
   a detection portion which is positioned on the side of the second surface of the elastic layer and detects external force applied to the elastic layer on the basis of displacement of the marker.

### EFFECTS OF THE INVENTION

According to the present invention, the marker is displaced when the elastic layer is deformed in accordance with the external force received by the pressure receiving portion. Thus, it is possible to accurately detect the external force received by the pressure receiving portion by detecting the deformation of the marker with the detection portion. Therefore, it is possible to provide a manipulator and a robot which can smoothly operate by controlling drive thereof on the basis of the external force detected by the detection portion, for example.

### BRIEF DESCRITION OF THE DRAWINGS

[Fig. 1] Fig. 1 is a planar view showing a manipulator according to a first embodiment of the present invention.
[Fig. 2] Fig. 2 is another planar view showing the manipulator according to the first embodiment of the present invention.
[Fig. 3] Fig. 3 is a cross-sectional view of the manipulator shown in Fig. 1.
[Fig. 4] Fig. 4 is a cross-sectional view of a pressure receiving portion shown in Fig. 3.
[Fig. 5] Fig. 5 is a cross-sectional view showing a state that the pressure receiving portion is deformed.
[Fig. 6] Fig. 6 is a cross-sectional view showing a modified example of the pressure receiving portion.
[Fig. 7] Fig. 7 is a cross-sectional view of a manipulator according to a second embodiment of the present invention.
[Fig. 8] Fig. 8 is a cross-sectional view of a manipulator according to a third embodiment of the present invention.
[Fig. 9] Fig. 9 is a cross-sectional view of a manipulator according to a fourth embodiment of the present invention.
[Fig. 10] Fig. 10 is a cross-sectional view showing a manipulator according to a fifth embodiment of the present invention.
[Fig. 11] Fig. 11 is a cross-sectional view showing a modified example of the manipulator shown in Fig. 10.
[Fig. 12] Fig. 12 is a cross-sectional view of a manipulator according to a sixth embodiment of the present invention.
[Fig. 13] Fig. 13 is a planar view of the manipulator shown in Fig. 12.
[Fig. 14] Fig. 14 is a planar view showing a manipulator according to a seventh embodiment of the present invention.
[Fig. 15] Fig. 15 is a cross-sectional view of the manipulator shown in Fig. 14.
[Fig. 16] Fig. 16 is a cross-sectional view showing a manipulator according to an eighth embodiment of the present invention.
[Fig. 17] Fig. 17 is a cross-sectional view showing the manipulator shown in Fig. 16.
[Fig. 18] Fig. 18 is a cross-sectional view showing a manipulator according to a ninth embodiment of the present invention.
[Fig. 19] Fig. 19 is a cross-sectional view showing a manipulator according to a tenth embodiment of the present invention.
[Fig. 20] Fig. 20 is a cross-sectional view showing a manipulator according to an eleventh embodiment of the present invention.
[Fig. 21] Fig. 21 is a cross-sectional view showing a manipulator according to a twelfth embodiment of the present invention.
[Fig. 22] Fig. 22 is a cross-sectional view showing a manipulator according to a thirteenth embodiment of the present invention.
[Fig. 23] Fig. 23 is a cross-sectional view showing a manipulator according to a fourteenth embodiment of the present invention.
[Fig. 24] Fig. 24 is a cross-sectional view showing a manipulator according to a fifteenth embodiment of the present invention.
[Fig. 25] Fig. 25 is a cross-sectional view showing a manipulator according to a sixteenth embodiment of the present invention.
[Fig. 26] Fig. 26 is a cross-sectional view showing a manipulator according to a seventeenth embodiment of the present invention.
[Fig. 27] Fig. 26 is another cross-sectional view showing the manipulator according to the seventeenth embodiment of the present invention.
[Fig. 28] Fig. 28 is yet-another cross-sectional view of the manipulator according to the seventeenth embodiment of the present invention.
[Fig. 29] Fig. 29 is a cross-sectional view showing a manipulator according to an eighteenth embodiment of the present invention.
[Fig. 30] Fig. 30 is a perspective view showing a robot according to a nineteenth embodiment of the present invention.
[Fig. 31] Fig. 31 is a cross-sectional view showing a robot according to a twentieth embodiment of the present invention.
[Fig. 32] Fig. 32 is a cross-sectional view showing a manipulator according to a twenty-first embodiment of the present invention.
[Fig. 33] Fig. 33 is another cross-sectional view showing the robot shown in Fig. 32.

### DETAILED DESCRIPTION OF THE PREFERRED EMBODIMENTS

Hereinafter, a manipulator and a robot of the present invention will be described in detail on the basis of preferred embodiments shown in the accompanying drawings.

### <First Embodiment>

First, a manipulator according to a first embodiment of the present invention will be described.

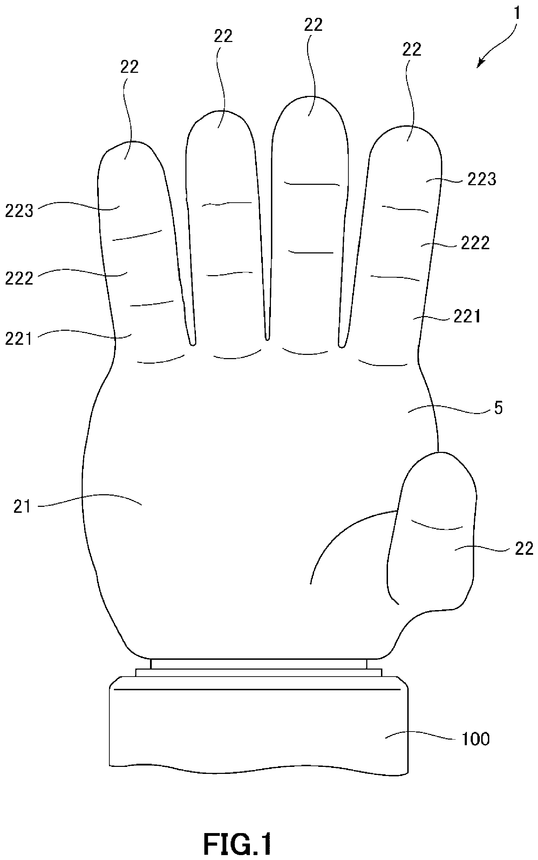

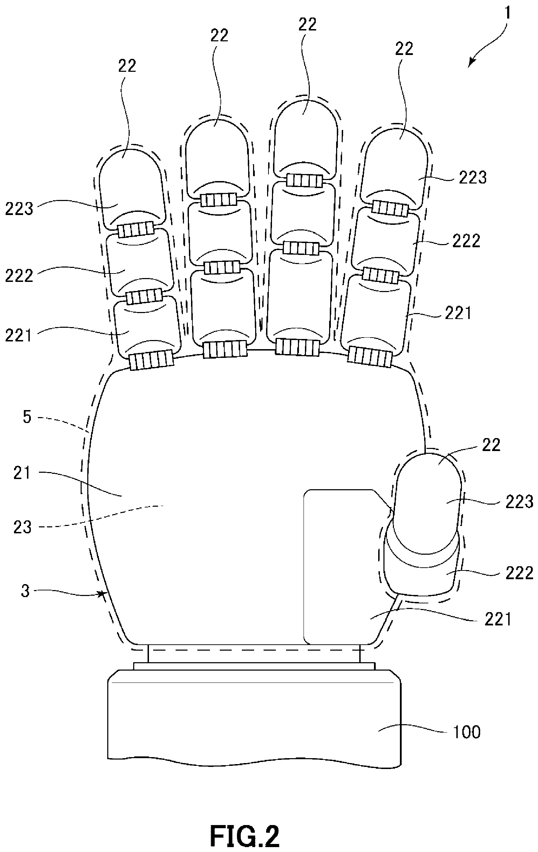

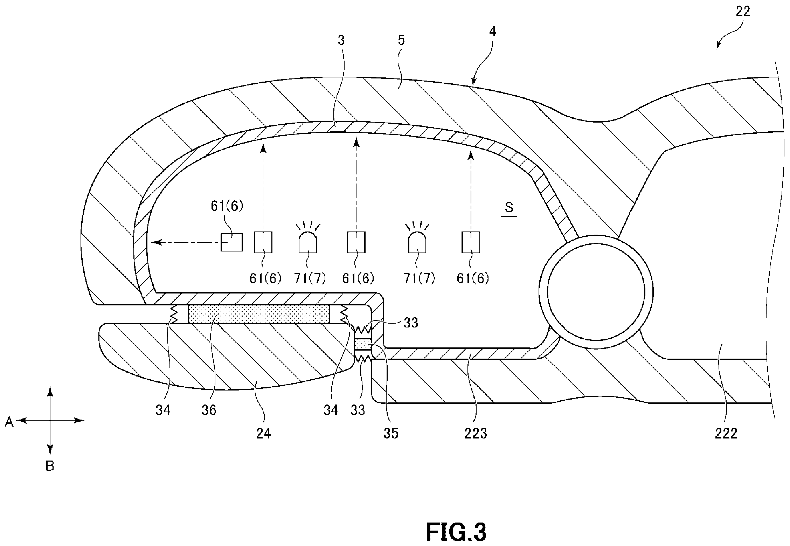

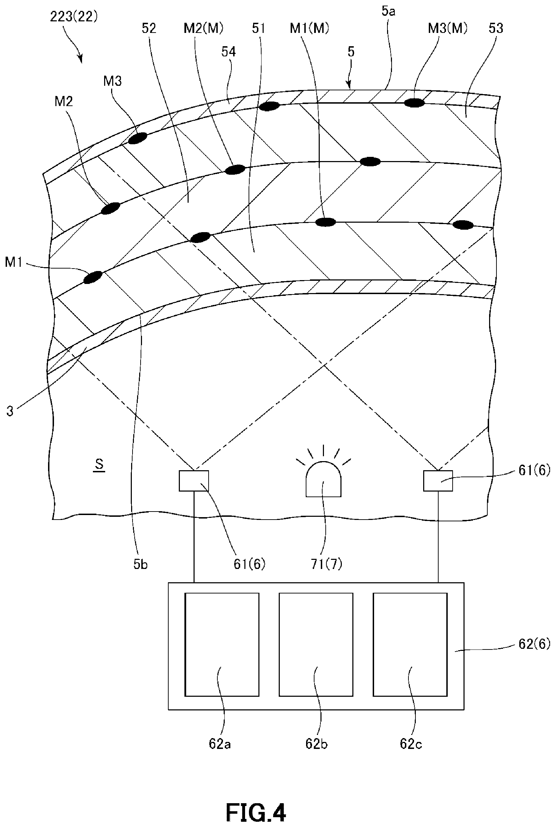

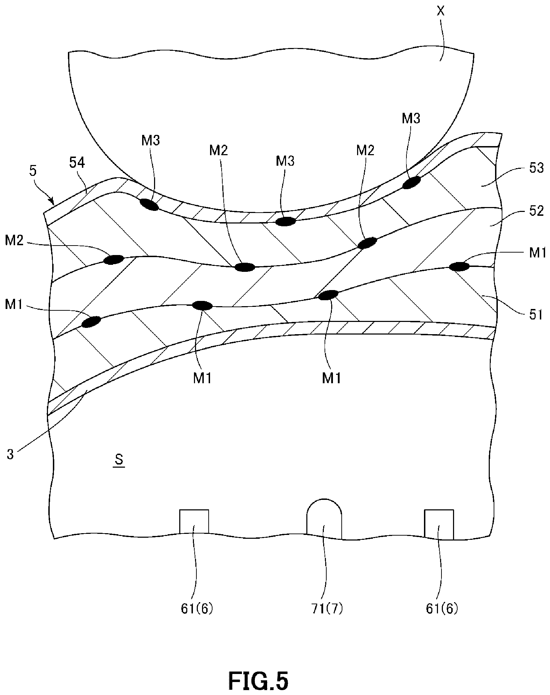

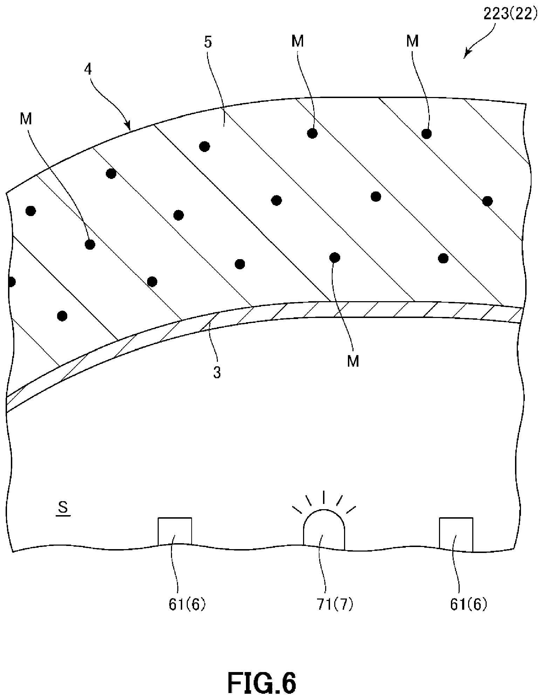

Each of Fig. 1 and Fig. 2 is a planar view showing the manipulator according to the first embodiment of the present invention. Fig. 3 is a cross-sectional view of the manipulator shown in Fig. 1. Fig. 4 is a cross-sectional view of a pressure receiving portion shown in Fig. 3. Fig. 5 is a cross-sectional view showing a state that the pressure receiving portion is deformed. Fig. 6 is a cross-sectional view showing a modified example of the pressure receiving portion. In this regard, the upper portion of a figure portion in Fig. 3 is sometimes referred to as "ball portion" and the lower portion of the figure portion in Fig. 3 is sometimes referred to as "rear portion" in the following description.

A manipulator 1 shown in Fig. 1 is utilized as a robot hand (end effector) and used in a state that the manipulator 1 is attached to a nursing care robot 100, for example. In this regard, the nursing care robot represents a robot which can lift up a care receiver who has difficulty in walking by own ability from a bed, rise an upper body of the care receiver on the bed, change a direction of the care receiver and lay the care receiver onto the bed. However, the use of the manipulator 1 is not limited to the situation in which the manipulator 1 is attached to the nursing care robot 100. For example, the manipulator 1 may be used in a state that the manipulator 1 is attached to, for example, a guidance robot for guiding users in a station, an airport, a commercial facility or the like, a delivery robot for delivering food and drink to costumers in a restaurant or the like or an industrial robot for manufacturing products in a factory or the like.

As shown in Fig. 2, the manipulator 1 includes a base portion 21 to be connected to the nursing care robot 100, five finger portions 22 connected to the base portion 21 and a control unit 23 for controlling drive of the manipulator 1. Further, each of the five finger portions 22 includes a proximal joint portion 221 (base end portion) connected to the base portion 21 through a joint mechanism, a middle joint portion 222 (middle portion) 222 connected to the proximal joint portion 221 through a joint mechanism and a distal joint portion (tip end portion) 223 connected to the middle joint portion 222 through a joint mechanism. Further, for example, each joint mechanism has a motor as a driving force source. Due to drive of the motor, the proximal joint portion 221 pivotally moves with respect to the base portion 21, the middle joint portion 222 pivotally moves with respect to the proximal joint portion 221 and the distal joint portion 223 pivotally moves with respect to the middle joint portion 222. By controlling drive of each motor with the control unit 23, the manipulator 1 as described above can open and close, grip an object and change its shape in various manner like a hand of a human.

Further, each of the base portion 21 and the finger portions 22 includes a housing 3 serving as a frame structure and an elastic layer 5 serving as a skin covering the housing 3. Furthermore, the housing 3 is constituted of a hard member, specifically constituted of a member which has hardness enough for allowing the member not to be substantially deformed by a level of pressure applied to the member during a normal use. On the other hand, the elastic layer 5 is constituted of a soft material which is soft enough for allowing the elastic layer 5 to be elastically deformed by external force applied during the normal use, that is contact with a circumferential object.

Next, the distal joint portion 223 of each finger portion 22 will be described. As shown in Fig. 3, the distal joint portion 223 includes the housing 3 as a support portion, a pressure receiving portion 4 which is disposed on the surface side of the housing 3 and receives pressure from outside, a detection portion 6 which is disposed inside the housing 3 and can detect deformation of the pressure receiving portion 4 and a light source 7 for illuminating the pressure receiving portion 4. Further, as shown in Fig. 4, the pressure receiving portion 4 includes the elastic layer 5 supported by the housing 3 and a marker M disposed in the elastic layer 5. In the manipulator 1 as described above, the elastic layer 5 is elastically deformed when the elastic layer 5 receives external force and the marker M is displaced in association with deformation of the elastic layer 5. Then, the detection portion 6 detects displacement of the marker M and detects the external force received by the elastic layer 5 on the basis of the displacement of the marker M. A detection result of the detection portion 6 is fed back to the control unit 23 and the control unit 23 controls the drive of each motor on the basic of the detection result of the detection portion 6. This enables the manipulator 1 to contact with the circumferential object and perform smooth and safe operations.

Further, as shown in Fig. 3, the distal joint portion 223 includes the housing 3 and a movable portion 24 which is formed as a separate component differing from the housing 3 and can be displaced with respect to the housing 3. The housing 3 is a portion which is equivalent to a "ball portion" of a distal joint potion of a finger of human and has a shape and location similar to those of the "ball portion" of the distal joint portion of the finger of the human. On the other hand, the movable portion 24 is a portion which is equivalent to a "nail" of the finger of the human and has a shape and location similar to those of the "nail" of the finger of the human. With this configuration, it is possible to make the distal joint portion 223 similar to the distal joint portion of the figure of the human and thus it is possible to provide the care receiver with feeling similar to a situation that the care receiver receives nursing care from hands of human. Therefore, it is possible to reduce uncomfortable feeling of the care receiver. However, the configuration of the distal joint portion 223 is not particularly limited. For example, the movable portion 24 may be omitted.

Further, as shown in Fig. 3, the movable portion 24 is biased toward the base end side (the side of the middle joint portion 222) by a first biasing member 33 disposed between the movable portion 24 and the housing 3 and biased toward the side of the housing 3 (the ball portion side) by a second biasing member 34 disposed between the movable portion 24 and the housing 3. In this regard, each of the first and second biasing members 33, 34 is not particularly limited. For example, a spring member or a rubber member may be utilized as each of the first and second biasing members 33, 34.

Further, as shown in Fig. 3, a first pressure-sensitive element 35 is disposed between a base end portion of the movable portion 24 and the housing 3 and thus external force received by the movable portion 24 in directions represented by a double-headed arrow A is transmitted to the first pressure-sensitive element 35. Therefore, the first pressure-sensitive element 35 can detect the external force applied to the movable portion 24 in the directions represented by the double-headed arrow A. Further, a second pressure-sensitive element 36 is disposed between a rear portion of the movable portion 24 and the housing 3 and thus external force received by the movable portion 24 in directions represented by a double-headed arrow B is transmitted to the second pressure-sensitive element 36. Therefore, the second pressure-sensitive element 36 can detect the external force applied to the movable portion 24 in the directions represented by the double-headed arrow B.

Each of the first and second pressure-sensitive elements 35, 36 is not particularly limited as long as it can detect the external force received by the movable portion 24. Each of the first and second pressure-sensitive elements 35, 36 can take a configuration containing a pressure-sensitive electrically-conductive resin whose resistance value varies in accordance with pressure applied thereto and a pair of wires disposed so as to sandwich the pressure-sensitive electrically-conductive resin, for example. With this configuration, it is possible to detect the resistance value of the pressure-sensitive electrically-conductive resin with the pair of wires and detect the external force received by the movable portion 24 on the basis of variation of the resistance value of the pressure-sensitive electrically-conductive resin. Further, it is possible to obtain the first and second pressure-sensitive elements 35, 36 with a relatively-small and relatively-simple configuration. In this regard, in a natural state, the first and second pressure-sensitive elements 35, 36 are compressed by the first and second biasing members 33, 34 in advance so as to be sandwiched between the movable portion 24 and the housing 3 with a compressed state. Thus, it is possible to detect the direction of the external force applied to the movable portion 24 on the basis of increase and decrease of the resistance value of the pressure-sensitive electrically-conductive resin. Namely, with the first and second pressure-sensitive elements 35, 36 each having the configuration as described above, it is possible to detect a magnitude of the applied external force on the basis of an absolute value of the variation of the resistance value and detect the direction of the applied external force on the basis of the increase and decrease of the resistance value. Thus, it is possible to obtain the first and second pressure-sensitive elements 35, 36 each having a superior detection characteristic.

However, each of the first and second pressure-sensitive elements 35, 36 is not particularly limited. For example, a piezoelectric element which can output an electrical charge according to a magnitude of received force may be utilized as each of the first and second pressure-sensitive elements 35, 36. Further, the first and second pressure-sensitive elements 35, 36 may be omitted.

In this regard, each of the housing 3 and the movable portion 24 is constituted of a hard member. Further, the housing 3 has optical transparency. In the present embodiment, each of the housing 3 and the movable portion 24 is constituted of a resin material. Especially, the housing 3 is substantially colorless and transparent. Further, an internal space S is formed inside the housing 3. Further, the detection portion 6 and the light source 7 are contained and disposed in this internal space S.

The elastic layer 5 is disposed so as to cover portions other than the movable portion 24 of the distal joint portion 233. Namely, the movable portion 24 is not covered by the elastic layer 5 and exposed to the outside of the distal joint portion 223. Thus, the displacement of the movable portion 24 is not interrupted by the elastic layer 5 and it is possible to accurately detect the external force applied to the movable portion 24 by using the first and second pressure-sensitive elements 35, 36.

When the elastic layer 5 receives the external force or the like, the elastic layer 5 is elastically deformed in accordance with the received external force. Further, as shown in Fig. 4, the elastic layer 5 is a layer in which an outer surface 5a (first surface) which is a pressure receiving surface which receives the external force and an inner surface 5b (second surface) on the opposite side of the outer surface 5a are defined. Further, the marker M displaced in association with the deformation of the elastic layer 5 is disposed in the elastic layer 5. The marker M is a detection target which can be detected by the detection portion 6.

As shown in Fig. 4, the marker M is disposed in the elastic layer 5 positioned on the ball portion of the distal joint portion 223. Further, the marker M contains first markers M1, second markers M2 and third markers M3 which are disposed so as to be shifted with each other in a thickness direction of the elastic layer 5. Further, distances from the first markers M1, the second markers M2 and the third markers M3 to the inner surface 5b are different from each other. The detection portion 6 detects the deformation of the elastic layer 5 on the basis of displacement of the first markers M1, the second markers M2 and the third markers M3 to detect the external force applied to the elastic layer 5.

As shown in Fig. 4, the elastic layer 5 includes a first elastic layer 51 which is disposed on an outer circumference of the housing 3 and on which the first markers M1 are disposed, a second elastic layer 52 which is disposed on the first elastic layer 51 and on which the second markers M2 are disposed, a third elastic layer 53 which is disposed on the second elastic layer 52 and on which the third markers M3 are disposed and a protective layer 54 disposed on the third elastic layer 53.

Each of the first elastic layer 51, the second elastic layer 52 and the third elastic layer 53 has optical transparency and elasticity (restoring force). Further, the plurality of first markers M1 are disposed on a surface of the first elastic layer 51 so as to be separated from each other, the plurality of second markers M2 are disposed on a surface of the second elastic layer 52 so as to be separated from each other and the plurality of third markers M3 are disposed on a surface of the third elastic layer 53 so as to be separated from each other.

In the present embodiment, each of the first, second and third elastic layers 51, 52 and 53 is substantially colorless and transparent. However, at least one of the first, second and third elastic layers 51, 52, 53 may be, for example, colored and transparent as long as the first, second and third elastic layers 51, 52, 53 have the optical transparency.

Constituent materials for the first, second and third elastic layers 51, 52, 53 are not particularly limited. Examples of the constituent materials include various thermoplastic elastomers such as a polyurethane-based elastomer, a styrene-based thermoplastic elastomer, an olefin-based thermoplastic elastomer, a vinyl chloride-based thermoplastic elastomer, an ester-based thermoplastic elastomer, an amide-based thermoplastic elastomer, a silicone-based thermoplastic elastomer and a fluorine-based thermoplastic elastomer; various rubber materials such as acrylic-based rubber, silicone-based rubber, butadiene-based rubber and styrene-based rubber; and the like. These materials can be used singularly or in a combination of two or more types of these materials for forming the elastic layers 51, 52, 53 (for example, a laminate of two or more layers constituted of different materials can be used as any one of the elastic layers 51, 52, 53) .

Elastic moduli (Young's moduli) of the first, second and third elastic layers 51, 52, 53 are not particularly limited. The elastic moduli may be equal to each other or different from each other. In a case where the elastic moduli of the first, second and third elastic layers 51, 52, 53 are different from each other, when the Young's modulus of the first elastic layer 51 is defined as E1, the Young's modulus of the second elastic layer 52 is defined as E2 and the Young's modulus of the third elastic layer 53 is defined as E3, the elastic layers 51, 52, 53 may be designed so as to satisfy the relation of E1<E2<E3 or may be reversely designed so as to satisfy the relation of E1>E2>E3, for example.

For example, in a case where the elastic layers 51, 52, 53 are designed so as to satisfy the relation of E1>E2>E3, it is possible to realize designs in which only the third elastic layer 53 which is softest is substantially deformed at the time of applying weak external force F1, only the second and third elastic layers 52, 53 are substantially deformed at the time of applying external force F2 larger than the external force F1 and the first, second and third elastic layers 51, 52, 53 are deformed at the time of applying external force F3 larger than the external force F2. In this case, it is possible to roughly detect the received pressure by detecting that the marker M on which elastic layer among the elastic layers 51, 52, 53 is displaced.

Each of the first, second and third markers M1, M2, M3 is formed in a dot shape, that is in a point shape. By forming each of the first, second and third markers M1, M2, M3 in the point shape as described above, the detection portion 6 can easily detect the displacement of the first, second and third markers M1, M2, M3, thereby accurately detecting the external force received by the elastic layer 5. However, the shape of each of the first, second and third markers M1, M2, M3 is not particularly limited.

Further, positions of the plurality of first markers M1 are not particularly limited. The plurality of first markers M1 may be disposed regularly or may be disposed irregularly. However, it is preferable that the plurality of first markers M1 are disposed regularly. With this configuration, it is possible to uniformly dispose the first markers M1 over the entire area of the first elastic layer 51 in proper quantities. Thus, it is possible to accurately detect the deformation of each portion of the first elastic layer 51 with the detection portion 6. The same discussion can be applied to positions of the second markers M2 and the third markers M3.

Further, depending on required detection accuracy and detection accuracy of the detection portion 6, specifically, a resolution of a camera 61, a processing speed of a processing unit 62 described later and the like, it is preferable that arrangement densities of the first, second and third markers M1, M2, M3 are the highest possible level as long as they can be distinctly recognized by the resolution of the camera 61. With this configuration, it is possible to more increase the number of the first, second and third markers M1, M2, M3 and the detection part 6 can more accurately the deformation of the elastic layer 5 in more detail.

The first, second and third markers M1, M2, M3 are different from each other in at least one of shape and hue and thus the first, second and third markers M1, M2, M3 can be distinctly recognized by the detection portion 6. In the present embodiment, the first, second and third markers M1, M2, M3 are different from each other in hue. For example, the first markers M1 are red, the second markers M2 are green and the third markers M3 are blue.

In a case where not the hues but the shapes of the first, second and third markers M1, M2, M3 are different from each other, each of the first markers M1 can be formed in a circular shape, each of the second markers M2 can be formed in a triangular shape and each of the third markers M3 can be formed in a quadrilateral shape, for example. Of course, the hues and shapes thereof may all be made different from each other. Further, the first, second and third markers M1, M2, M3 may be recognized by the detection portion 6 using methods other than the method that makes the hues and shapes of the first, second and third markers M1, M2, M3 different from each other.

Further, it is preferable that the first, second and third markers M1, M2, M3 are disposed so as not to overlap each other when seen from the camera 61 of the detection portion 6 in the natural state. Namely, it is preferable that, on an image captured by the camera 61, the second markers M2 are disposed so as not to be hidden by the first markers M1 present in front thereof and the third markers M3 are disposed so as not to be hidden by the first and second markers M1, M2 present in front thereof. With this configuration, the displacement of each of the first, second and third markers M1, M2, M3 can be more accurately captured by the camera 61. Therefore, the detection portion 6 can more accurately detect the external force received by the elastic layer 5. In this regard, the term "natural state" as used therein refers to, for example, a stationary state where the external force is not substantially applied to the elastic layer 5.

Hereinbefore, the marker M has been described. The configuration of the marker M is not particularly limited. For example, the third markers M3 may be omitted or the second and third markers M2, M3 may be omitted. Further, the shape of each of the first, second and third markers M1, M2, M3 is not limited to the dot shape. The shape of each of the first, second and third markers M1, M2, M3 may be a linear shape, a surface shape, a stereoscopic shape or the like. Further, the first, second and third markers M1, M2, M3 may be respectively attached to the surfaces of the first, second and third elastic layers 51, 52, 53 or may be respectively printed on the surfaces of the first, second and third elastic layers 51, 52, 53 using ink or the like. Further, the first, second and third markers M1, M2, M3 may be respectively disposed inside the first, second and third elastic layers 51, 52, 53. Further, the marker M may not be disposed on the elastic layer 5. For example, the marker M may be disposed on a cover member disposed on the elastic layer 5 so as to cover the elastic layer 5. As described above, by disposing the marker M on the cover member, it is possible to easily change another marker M suitable for the intended use by replacing the cover member with another cover member on which the other marker M is disposed.

The protective layer 54 has a function of protecting the third elastic layer 53 as a main function. Further, the protective layer 54 has optical transparency and elasticity as is the case with the first, second and third elastic layers 51, 52, 53. In the present embodiment, the protective layer 54 is colorless and transparent. However, the protective layer 54 may be colored and transparent. A constituent material for the protective layer 54 as described above is not particularly limited. Examples of the constituent material for the protective layer 54 include the same materials as the above-described constituent materials for the first, second and third elastic layers 51, 52, 53.

A thickness of each layer 51, 52, 53, 54 is not particularly limited. For example, the thickness of each layer 51, 52, 53, 54 is preferably equal to or more than 0.1 mm and equal to or less than 2.0 mm, and more preferably equal to or more than 0.5 mm and equal to or less than 1.5 mm. By forming each layer 51, 52, 53, 54 with the thickness described above, it is possible to suppress a thickness of the elastic layer 5 and sufficiently deform the elastic layer 5 when the elastic layer 5 receives the pressure. Thus, it is possible to prevent a size of the distal joint portion 223 from excessively increasing and enabling the first, second and third markers M1, M2, M3 to be sufficiently displaced, thereby accurately detecting the received pressure.

The detection portion 6 three-dimensionally detects the deformation of the elastic layer 5 using a stereo photographic method. By using the stereo photographic method as described above, it is possible to detect the deformation of the elastic layer 5 in a relatively simple way and with high accuracy.

As shown in Fig. 3 and Fig. 4, the detection portion 6 includes a plurality of cameras 61 as a photographing portion disposed within the internal space S. Each portion of the elastic layer 5 can be photographed by at least two of the cameras 61 and thereby each portion of the elastic layer 5 can be subjected to a three-dimensional image recognition, that is a stereo image recognition.

Each camera 61 is not particularly limited. For example, a CCD camera, a CMOS camera or the like can be used as the camera 61. Further, in the present embodiment, although the three-dimensional image recognition is performed on each portion of the elastic layer 5 using two of the cameras 61, it may be possible to perform the three-dimensional image recognition on each portion of the elastic layer 5 using a plurality of images obtained in a time-division manner with one camera 61 using lenses having a plurality of optical axes, for example. According to this configuration, it is possible to achieve a size reduction and a cost reduction of the photographing portion. In this regard, the term of "each portion of the elastic layer 5" sometimes refers to an entire area of the elastic layer 5 and sometimes refers to a partial area selected from the elastic layer 5.

Further, as shown in Fig. 4, the detection portion 6 includes the processing unit 62 which can perform the three-dimensional image recognition for the elastic layer 5 on the basis of image information from each camera 61. Further, the processing unit 62 includes, for example, a CPU 62a that controls each component of each camera 61, a memory 62b, a storage unit 62c such as a flash memory or the like. The processing unit 62 is configured to be capable of executing a predetermined program (code) . In this regard, the program may be stored in, for example, a storage medium or may be downloaded from an external server.

When the external force is applied to the elastic layer 5, the portion to which the external force is applied is deformed and thus the first, second and third markers M1, M2, M3 are deformed in association with the deformation of the elastic layer 5. Specifically, for example, as shown in Fig. 5, in a case where a portion of the elastic layer 5 is deformed due to contact with a care receiver X, each of the first, second and third markers M1, M2, M3 located immediately below this portion and in the vicinity of this portion is displaced in accordance with the received pressure. The processing unit 62 detects the displacement of the first, second and third markers M1, M2, M3 with the three-dimensional image recognition to obtain information including a position from which the external force is applied, a magnitude of the applied external force, a direction of the external force, a speed of the external force or the like on the basis of the detection result.

As described above, since the first, second and third markers M1, M2, M3 are disposed in the elastic layer 5, the detection portion 6 can accurately detect the external force applied to the elastic layer 5 on the basis of the displacement of the first, second and third markers M1, M2, M3. Especially, in the present embodiment, the first, second and third markers M1, M2, M3 are disposed so as to be shifted in the thickness direction of the elastic layer 5 with each other. Therefore, the detection portion 6 can detect the deformation at different positions in the thickness direction of the elastic layer 5 and can detect the external force applied to the elastic layer 5 in more detail.

Here, one example of a method of detecting the pressure performed by the processing unit 62 will be briefly described. A three-dimensional coordinate of each camera 61 is stored in advance in the storage unit 62c of the processing unit 62. The processing unit 62 obtains same-time images using two cameras 61 for detecting displacement of a predetermined marker M (hereinafter, referred to as "predetermined marker M") and obtains two-dimensional coordinates of the predetermined marker M in the both same-time images. Next, the processing unit 62 obtains the three-dimensional coordinate of the predetermined marker M on the basis of a shift between the two-dimensional coordinates of the predetermined marker M in the both same-time images and the three-dimensional coordinate of each camera 61 to store the obtained three-dimensional coordinate in the storage unit 62c. The processing unit 62 continuously performs this work for each frame. The processing unit 62 compares the three-dimensional coordinate of the predetermined marker M obtained at the previous time with the three-dimensional coordinate of the predetermined marker M obtained at this newly time. As a result, the processing unit 62 can detect the displacement of the predetermined marker M generated in the interval. The processing unit 62 performs such work on all the markers M and thereby the processing unit 62 can detect the deformation of the elastic layer 5 and the external force received by the elastic layer 5. In this regard, the frame rate of each camera 61 is not particularly limited. For example, it can be set to 15 frames/second, 30 frames/second, 60 frames/second and the like depending on the required detection accuracy.

Here, in the present embodiment, the elastic layer 5 covers the entire of the finger portion 22. Thus, even in the natural state that the external force is not applied, when the proximal joint portion 221 pivotally moves with respect to the base portion 21, the middle joint portion 22 pivotally moves with respect to the proximal joint portion 221 or the distal joint portion 223 pivotally moves with respect to the middle joint portion 222, there is risk that the elastic layer 5 disposed on the distal joint portion 223 is deformed and the marker M is displaced in association with the deformation of the elastic layer 5. Namely, there is risk that the position of the marker M in the natural state varies depending on conditions of the finger portion 22.

Thus, it is preferable that the detection portion 6 stores reference information on the position of the marker M in the natural state for a plurality of cases where a posture of the finger portion 22 is changed. With this configuration, the detection portion 6 can select one of the reference information for the posture which matches with a posture of the finger potion 22 at the time of a detection timing or select one of the reference information for the posture which is most similar to the posture of the finger potion 22 at the time of the detection timing to perform calibration for setting the selected reference information as the natural state when the detection is performed. With this configuration, the detection portion 6 can more accurately detect the external force received by the elastic layer 5.

Although the method of detecting the external force using the processing unit 62 has been explained in the above description, the method of detecting the external force using the processing unit 62 is not particularly limited. For example, in a case where the above-described work is performed on all of the markers M, the amount of processing increases. In this case, it is concerned that the increased processing cannot be executed by the processing unit 62 depending on the performance of the processing unit 62 or the like. Further, depending on application, there is a case where it is only required to roughly detect the received pressure. Therefore, in such a case, the processing unit 62 may perform the above-described work on only some of the markers M selected in advance, for example.

Further, for example, the processing unit 62 may store an image of each portion of the elastic layer 5 in the natural state as a reference image and compare this reference image with the images obtained as described above in real time to specify the displacement of each marker M. With this configuration, the processing unit 62 can detect the pressure received by the elastic layer 5.

In this regard, the processing unit 62 may be configured to include an artificial intelligence (AI) and train the AI with a function learning method. In this case, the processing unit 62 reads a number of images obtained from the cameras 61 to train the AI about the displacement of the marker M. This makes it possible to more accurately detect the displacement of each marker M in a short time. In this regard, examples of the function learning method include a support vector machine, a Bayesian network, a collaborative filtering and a neural network containing a deep learning.

As described above, in the present embodiment, each layer 51, 52, 53, 54 is colorless and transparent. Thus, each camera 61 can photograph an outside world of the elastic layer 5 through the elastic layer 5. Therefore, the processing unit 62 can detect the position of the distal joint portion 223 and the like from conditions of the outside world captured by each camera 61. In this regard, the recognition for the outside world due to the detection portion 6 is not necessarily required and the detection portion 6 may not perform the recognition for the outside world. In this case, the protective layer 54 does not need to have the optical transparency and may not have the optical transparency. If the protective layer 54 does not have the optical transparency, light from the light source 7 does not leak to the outside of the distal joint portion 23. Thus, a person who stands in the vicinity of the manipulator 1 does not feel dazzling.

The light source 7 has a function of illuminating the elastic layer 5 from the side of the inner surface 5b. As shown in Fig. 3 and Fig. 4, the light source 7 includes a plurality of light-emitting portions 71 disposed within the internal space S. Almost entire area of the elastic layer 5 is substantially equally illuminated by light from these light-emitting portions 71. By arranging the light source 7 as described above, it is possible to photograph the elastic layer 5 with the cameras 61 with more high accuracy and more high resolution.

In this regard, each of the light-emitting portions 71 is not particularly limited. For example, each of the light-emitting portions 71 may be an LED. Each of the light-emitting portions 71 may emit visible light, NIR light (near-infrared light) or ultraviolet light. Each camera 61 may be configured to correspond to visible light in a case where an element that emits the visible light is used as the light-emitting portion 71. Further, each camera 61 may be configured to correspond to NIR light in a case where an element that emits the NIR light is used as the light-emitting portion 71. Furthermore, each camera 61 may be configured to correspond to ultraviolet light in a case where an element that emits the ultraviolet light is used as the light-emitting portion 71. Especially, since the NIR light or the ultraviolet light is invisible to human eyes, a person who stands in the vicinity of the manipulator 1 does not feel dazzling even in a case where the light leaks to the outside through the elastic layer 5. Further, especially, in a case where each light-emitting portion 71 emits the ultraviolet light, the marker M may be a phosphor. With this configuration, an image of the marker M can be captured more vividly by the cameras 61.

In this regard, the light source 7 may be omitted in a case where the elastic layer 5 is kept sufficiently bright by light from the outside world in a level for enabling the image recognition for the elastic layer 5, for example. Further, a luminance sensor may be disposed within the internal space S and the drive of each light-emitting portion 71 may be controlled on the basis of the brightness in the internal space S detected by this luminance sensor. Thereby, it is possible to maintain the brightness in the internal space S to be substantially constant and to more stably perform the image recognition for the elastic layer 5 using the detection portion 230, for example.

The detection result of the detection portion 6, that is the information on the detected external force is transmitted to the control unit 23. The control unit 23 controls the drive of the manipulator 1 on the basis of the received information. As described above, by detecting the external force received by the elastic layer 5 and feeding back the detection result to the control unit 23, it is possible to more smoothly and more safely perform the drive of the manipulator 1.

Here, one example of the drive control for the manipulator 1 which is performed by the control unit 23 is described. For example, at the time of performing an operation of supporting the care receiver X from the lower side to lift up the care receiver X with the manipulator 1, if external force (weight) applied to one finger portion 22 is larger than external force (weight) applied to other finger portions 22, the control unit 23 changes the direction and/or posture of each finger portion 22 to make the external force (weight) applied to each finger portion 22 substantially equal to each other. With this configuration, it is possible to suppress that excessive external force is applied to only one figure portion 22 and suppress failure of each finger portion 22. Further, since it is possible to support the care receiver X with a broader area, a posture of the care receiver X becomes stable and burden of the care receiver X can be reduced.

In this regard, although the manipulator 1 includes the control unit 23 in the present embodiment, the control unit 23 may be omitted. In this case, it is preferable that a robot control unit (not shown) contained in the robot 100 has the same function as that of the control unit 23, for example.

The manipulator 1 of the present embodiment has been explained in the above description. As described above, the manipulator 1 includes the pressure receiving portion 4 containing the elastic layer 5 in which the outer surface 5a (the first surface) which is the pressure receiving surface and the inner surface 5b (the second surface) on the opposite side of the outer surface 5a are defined, the marker M which is disposed in the elastic layer 5 and displaced in association with the deformation of the elastic layer 5 and the detection portion 6 which is positioned on the side of the inner surface 5b of the elastic layer 5 and detects the external force applied to the elastic layer 5 on the basis of displacement of the marker M. With this configuration, the marker M is displaced in accordance with the external force received by the elastic layer 5. Thus, by detecting the displacement of the marker M with the detection portion 6, it is possible to accurately detect the external force received by the elastic layer 5. Therefore, for example, by controlling the drive on the basis of the external force detected by the detection portion 6, the manipulator 1 can smoothly operate. Especially, the detection portion 6 can detect the magnitude of the external force received by the elastic layer 5, the input direction of the external direction, the input speed and the like on the basis of the displacement of the marker M and thus it is possible to detect the received external force in more detail.

Further, as described above, in the manipulator 1, the marker M contains the first markers M1 and the second markers M2 so that the distances from the inner surface 5b to each of the first markers M1 and each of the second markers M2 are different from each other. Thus, the detection portion 6 can obtain the deformation of each portion of the elastic layer 5 in the thickness direction thereof (for example, an outer surface vicinity portion, a center vicinity portion, an inner surface vicinity portion). Therefore, it is possible to more accurately detect the external force received by the elastic layer 5 with the detection portion 6. Especially, in the present embodiment, since the marker M further contains the third markers M3, the above-mentioned effect becomes more remarkable.

Further, as described above, in the manipulator 1, the elastic layer 5 includes the first elastic layer 51 having the first markers M1 and the second elastic layer 52 disposed on the first elastic layer 51 and having the second markers M2. With this configuration, it becomes easy to arrange the first markers M1 and the second markers M2 in the elastic layer 5.

Further, as described above, in the manipulator 1, this first markers M1 and the second markers M2 are different from each other in at least one of the shape and the hue. With the configuration, the detection portion 6 can distinctly recognize the first markers M1 and the second markers M2 with ease. Thus, it is possible to more accurately detect the displacement of each of the first markers M1 and the second markers M2 with the detection portion 6.

Further, as described above, in the manipulator 1, the detection portion 6 includes the cameras 61 as the photographing portion for photographing the marker M and detects the displacement of the marker M on the basis of the image data of the marker M photographed by the cameras 61. With this configuration, it is possible to detect the displacement of the marker M with the relatively simple configuration. Especially, in the present embodiment, the detection portion 6 detects the displacement of the marker M with the stereo photographic method. Thus, it is possible to detect the displacement of the marker M in the relatively simple way and with the high degree of accuracy. Therefore, it is possible to accurately detect the external force received by the elastic layer 5.

Further, as described above, the manipulator 1 includes the housing 3 as the support portion for supporting the elastic layer 5 from the side of the inner surface 5b. With this configuration, the shape of the elastic layer 5 becomes stable and thus unintentional deformation of the elastic layer 5 such as deformation caused by its own weight is suppressed. Therefore, it is possible to more accurately detect the external force received by the elastic layer 5.

Further, as described above, the manipulator 1 includes the movable portion 24 which can be displaced with respect to the housing 3 and the first and second pressure-sensitive elements 35, 36 for detecting the external force applied to the movable portion 24. With this configuration, it is possible to detect not only the external force applied to the elastic layer 5 but also the external force applied to the movable portion 24. By providing the first and second pressure-sensitive elements 35, 36 which are pressure detecting means differing from the pressure receiving portion 4 as described above, it is possible to accurately detect the external force received by the manipulator 1 on the basis of the detection results from both of the pressure receiving portion 4 and the first and second pressure-sensitive elements 35, 36.

Further, as described above, the manipulator 1 includes the base portion 21 and the finger portions 22 connected to the base portion 21. Further, the pressure receiving portion 4 is disposed on at least the distal joint portion 223 which is the tip end portion of each finger portion 22. Depending on the use method of the manipulator 1, the distal joint portion 223 is often positioned on the tip end side of the moving direction of the manipulator 1 and has a high possibility of contacting with a circumferential object. Thus, by providing the pressure receiving portion 4 at such a location, it is possible to more finely drive the manipulator 1. However, the arrangement of the pressure receiving portion 4 is not particularly limited. The pressure receiving portion 4 may not be disposed on the distal joint portion 223. Further, the pressure receiving portion 4 may be disposed at a location other than the distal joint portion 223 as shown in the following embodiments.

Although the manipulator 1 of the first embodiment has been explained in the above description, the configuration of the manipulator 1 is not limited to the configuration described in the present embodiment. For example, although the manipulator 1 of the present embodiment includes the five finger portions 22, the number of the finger portions 22 is not limited to five and may be 4 or less, or 6 or more. Further, although each finger portion 22 includes the proximal joint portion 221, the middle joint portion 222 and the distal joint portion 223 which are connected each other through the joint mechanisms in the manipulator 1 of the present embodiment, the configuration of each finger portion 22 is not limited thereto. For example, each finger portion 22 may not include the joint mechanisms and the shape of each finger portion 22 may be fixed.

Further, although the housing 3 is constituted of the hard member in the present embodiment, the housing 3 may be constituted of a soft member so that the housing 3 is deformed together with the elastic layer 5 when the housing 3 receives the pressure, for example. With this configuration, for example, compared with the present embodiment, it is possible to more increase displace amounts of the first, second and third markers M1, M2, M3. Thus, the detection portion 6 can more accurately detect the external force received by the elastic layer 5.

Further, for example, elastomeric force of the elastic layer 5 may be variable. With this configuration, the elastomeric force of the elastic layer 5 can vary depending on the application of the manipulator 1 and thus it is possible to improve operability of the manipulator 1. The configuration of the pressure receiving portion 4 in this case is not particularly limited. For example, the pressure receiving portion 4 may include a first cover portion having a first airtight space between the housing 3 and itself, the first markers M1 disposed on a surface of the first cover portion, a second cover portion which covers the first cover portion and has a second airtight space between the first cover portion and itself, the second markers M2 disposed on a surface of the second airtight space, a third cover portion which covers the second cover portion and has a third airtight space between the second cover portion and itself, the third markers M3 disposed on a surface of the third cover portion and a protective cover portion which covers the third cover portion and has a fourth airtight space between the third cover portion and itself. In this configuration, gas such as air and rare gas is supplied into each of the first airtight space, the second airtight space, the third airtight space and the fourth airtight space with a pump or the like so that pressure in each airtight space can be adjusted. Further, in this case, for example, it is preferable that some portions of the housing 3 and the first cover portion are connected to each other through a tool such as a band which is not substantially stretched and disposed in the first airtight space for suppressing unintentional displacement of the first cover portion with respect to the housing 3. The same discussion can be applied to the second cover portion, the third cover portion and the protective cover portion.

Further, the first markers M1 are disposed on the first elastic layer 51, the second markers M2 are disposed on the second elastic layer 52 and the third markers 53 are disposed on the third elastic layer 53 in the present embodiment. However, a plurality of markers M may be disposed regularly or irregularly within the one-layered elastic layer 5 so that distances from the housing 3 are different from each other as shown in Fig. 6, for example.

Further, the manipulator 1 may includes a heating portion for heating the elastic layer 5. With this configuration, for example, it is possible to heat the elastic layer 5 in the range of 35 °C to 38 °C which is near to a body temperature and thus it is possible to provide the care receiver with feeling which is more similar to a human hand. The heating portion may be configured to uniformly heat the entire of the elastic layer 5 or to heat only a part of the elastic layer 5. Further, the heating portion is not partially limited. For example, the heating portion may take a configuration of heating the elastic layer 5 with infrared rays. Conversely, the manipulator 1 may include a cooling portion for cooling the elastic layer 5. Further, the manipulator 1 may include both of the heating portion and the cooling portion.

Further, the manipulator 1 may include an image projection unit for projecting video light onto an inner circumferential surface of the housing 3 from the inner side of the housing 3 to display an image (video) which is viewable from the outside of the elastic layer 5. The displayed image is not particularly limited. For example, an image for assisting and guiding the operation of the manipulator 1 may be displayed. More specifically, for example, in a case of prompting the care receiver to grip the manipulator 1, a massage of "please grip the manipulator" and the like may be displayed. With this configuration, the operability of the manipulator 1 is improved. The image projection unit is not particularly limited. For example, a liquid crystal-type projector, an optical scan-type projector and the like may be used as the image projection unit.

### <Second Embodiment>

Next, a manipulator according to a second embodiment of the present invention will be described.

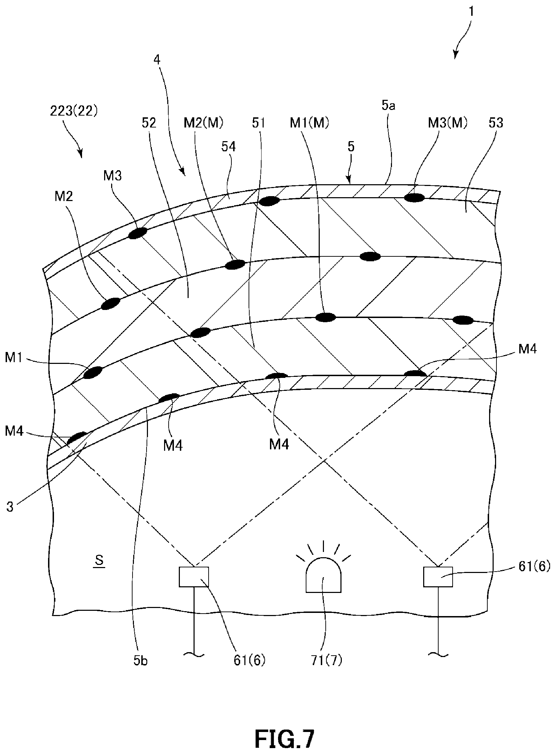

Fig. 7 is a cross-sectional view showing the manipulator according to the second embodiment of the present invention.

The manipulator 1 according to the present embodiment is the same as the manipulator 1 of the above-described first embodiment except that the configuration of the pressure receiving portion 4 is different from that in the above-described first embodiment.

In the following description, the manipulator 1 of the second embodiment will be described with a focus on differences from the above-described first embodiment and the description for similar particulars will not be given. Further, in Fig. 7, the same components as those in the above-described embodiment are denoted by the same reference numerals and signs.

As shown in Fig. 7, in the manipulator 1 of the present embodiment, the pressure receiving portion 4 contains reference markers M4 which are not displaced due to the deformation of the elastic layer 5 and can be detected by the detection portion 6. In the present embodiment, the reference markers M4 are disposed between the first elastic layer 51 and the housing 3 and on the outer circumferential surface of the housing 3. However, positions of the reference markers M4 are not particularly limited. For example, the reference markers M4 may be disposed on the inner circumferential surface of the housing 3.

Each reference marker M4 has a constant relative positional relationship with each camera 61 and serves as a reference when the detection portion 6 detects the displacement of the first, second and third markers M1, M2, M3. With this configuration, the detection portion 6 detects the displacement of the first, second and third markers M1, M2, M3 with respect to the reference markers M4 to more accurately detect the external force received by the elastic layer 5. In this regard, it is preferable that each reference marker M4 is different from the first, second and third markers M1, M2, M3 in at least one of shape, hue and the like so that the detection portion 6 can distinguish (recognize) the reference markers M4 from each of the first, second and third markers M1, M2, M3.

In such a second embodiment, it is also possible to provide the same effect as that in the above-described first embodiment.

### <Third embodiment>

Next, a manipulator according to a third embodiment of the present invention will be described.

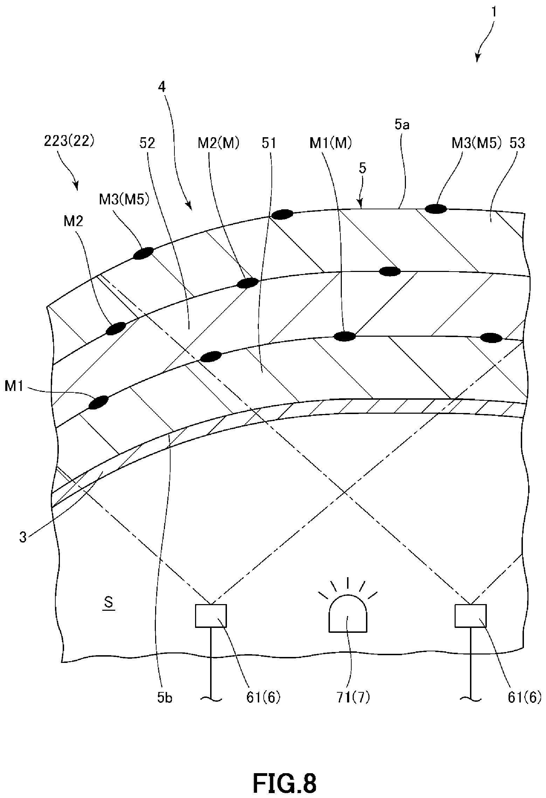

Fig. 8 is a cross-sectional view showing the manipulator according to the third embodiment of the present invention.

The manipulator 1 according to the present embodiment is the same as the manipulator 1 of the above-described first embodiment except that the configuration of the pressure receiving portion 4 is different from that in the above-described first embodiment.

In the following description, the manipulator 1 of the third embodiment will be described with a focus on differences from the above-described first embodiment and the description for similar particulars will not be given. Further, in Fig. 8, the same components as those in the above-described embodiment are denoted by the same reference numerals and signs.

As shown in Fig. 8, in the manipulator 1 of the present embodiment, the marker M contains exposed markers M5 which are exposed on the outer surface 5a of the elastic layer 5. Specifically, compared with the above-described first embodiment, the protective layer 54 is omitted from the pressure receiving portion 4. Thus, the third markers M3 are exposed on the outer surface 5a of the elastic layer 5 and the third markers M3 constitute the exposed markers M5. The outer surface 5a of the elastic layer 5 is the pressure receiving surface for receiving the pressure. Thus, by disposing the exposed markers M5 on the outer surface 5a of the elastic layer 5, followability of the marker M with respect to the received pressure is improved. Therefore, the detection portion 6 can accurately detect the received pressure.

Further, it is preferable that each exposed marker M5 has a portion protruding from the outer surface 5a of the elastic layer 5. With this configuration, an object contacting with the elastic layer 5 becomes likely to get caught by each exposed marker M5. Therefore, especially, responsiveness of the deformation of the elastic layer 5 with respect to force along the outer surface 5a of the elastic layer 5 is improved. Further, in this case, it is preferable that a Young's modulus of each exposed marker M5 is larger than the Young's modulus of a layer constituting the outer surface 5a of the elastic layer 5, that is the third elastic layer 53 in the present embodiment. Namely, it is preferable that each exposed marker M5 is harder than the third elastic layer 53. With this configuration, the object becomes more likely to get caught by each exposed marker M5 and thus the above-described effect becomes more remarkable.

In this regard, although the case where each exposed marker M5 is constituted of each third marker M3 has been described in the present embodiment, the configuration of each exposed marker M5 is not particularly limited. The exposed marker M5 may be constituted of any markers other than the third markers M3.

In such a third embodiment, it is also possible to provide the same effect as that in the above-described first embodiment.

### <Fourth Embodiment>

Next, a manipulator according to a fourth embodiment of the present invention will be described.

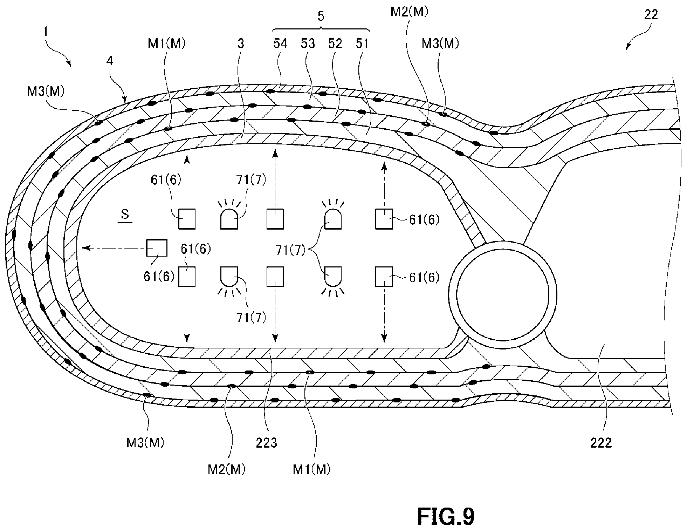

Fig. 9 is a cross-sectional view showing the manipulator according to the fourth embodiment of the present invention.

The manipulator 1 according to the present embodiment is the same as the manipulator 1 of the above-described first embodiment except that the configuration of the distal joint portion 223 is different from that in the above-described first embodiment.

In the following description, the manipulator 1 of the fourth embodiment will be described with a focus on differences from the above-described first embodiment and the description for similar particulars will not be given. Further, in Fig. 9, the same components as those in the above-described embodiment are denoted by the same reference numerals and signs.

As shown in Fig. 9, in the manipulator 1 of the present embodiment, compared with the configuration of the above-described first embodiment, the movable portion 24 is omitted from the distal joint portion 223. Further, the entire of the distal joint portion 223 is covered by the elastic layer 5. Further, the marker M is disposed over the entire portion of the elastic layer 5 covering the distal joint portion 223. Namely, the marker M is disposed on both of the portion on the ball portion side and the portion on the rear side of the distal joint portion 223.

In such a fourth embodiment, it is also possible to provide the same effect as that in the above-described first embodiment.

### <Fifth Embodiment>

Next, a manipulator according to a fifth embodiment of the present invention will be described.

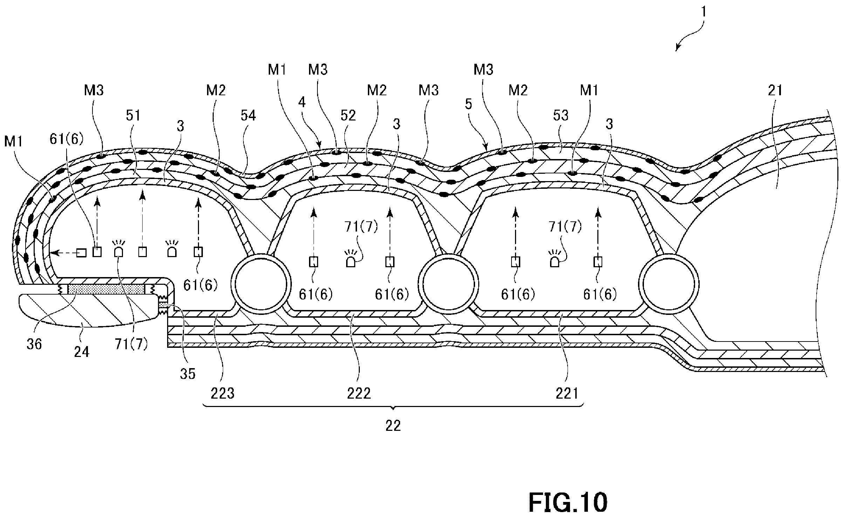

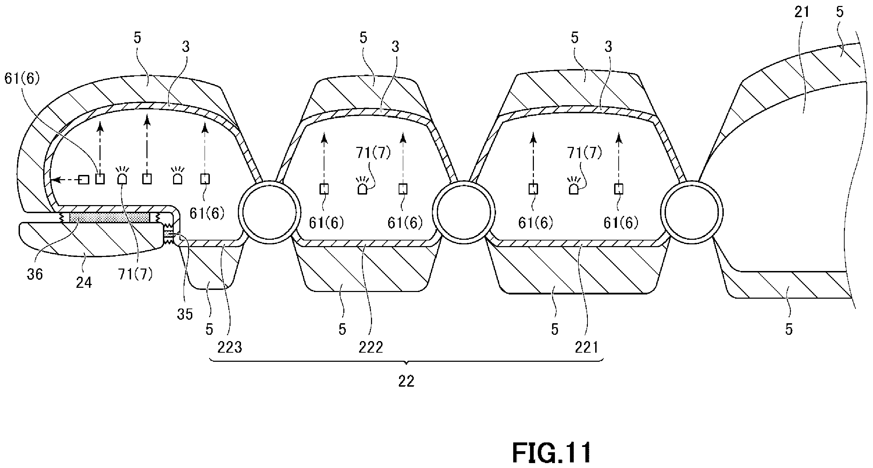

Fig. 10 is a cross-sectional view showing the manipulator according to the fifth embodiment of the present invention. Fig. 11 is a cross-sectional view showing a modified example of the manipulator shown in Fig. 10.

The manipulator 1 according to the present embodiment is the same as the manipulator 1 of the above-described first embodiment except that the configuration of the detection portion 6 is different from that in the above-described first embodiment.

In the following description, the manipulator 1 of the fifth embodiment will be described with a focus on differences from the above-described first embodiment and the description for similar particulars will not be given. Further, in Fig. 10 and Fig. 11, the same components as those in the above-described embodiment are denoted by the same reference numerals and signs.

As shown in Fig. 10, in the manipulator 1 of the present embodiment, additional detection portions 6 and additional light sources 7 are respectively disposed in the middle joint portion 222 and the proximal joint portion 221 in addition to the distal joint portion 223. Further, the marker M is disposed in the elastic layer 5 disposed on the ball portions of the middle joint portion 222 and the proximal joint portion 221. Thus, the detection portions 6 can detect the displacement of the first, second and third markers M1, M2, M3 at the middle joint portion 222 and the proximal joint portion 221. With this configuration, it is possible to detect the pressure received by the elastic layer 5 in the almost entire area of the finger portion 22 in the lengthwise direction thereof and thus it is possible to more accurately control the drive of the manipulator 1.

Here, for example, the arrangement densities of the markers M on the distal joint portion 223, the middle joint portion 222 and the proximal joint portion 221 are not particularly limited. They may be equal to each other or may be different from each other. However, it is preferable that the arrangement density of the marker M on the distal joint portion 223 is higher than the arrangement densities of the markers M on the middle joint portion 222 and the proximal joint portion 221. Further, it is preferable that the arrangement density of the marker M on the middle joint portion 222 is higher than the arrangement density of the marker M on the proximal joint portion 221. Namely, it is preferable that the arrangement density of the marker M on the tip end portion of the finger portion 22 is higher than the arrangement density of the marker M on the base end portion of the finger portion 22. As described in the above-described first embodiment, since the detection of the external force at the distal joint portion 223 is most effective, it is possible to more accurately detect the external force by making the arrangement density of the marker M on the distal joint portion 223 higher. Further, since the middle joint portion 222 and the proximal joint portion 221 are not important compared with the distal joint portion 223, it is possible to reduce burden of the processing unit 62 for detecting the external force at the middle joint portion 222 and the proximal joint portion 221 by making the arrangement densities of the markers M on the middle joint portion 222 and the proximal joint portion 221 lower. Thus, the detection portion 6 can more accurately detect the external force received by the finger portion 22 and suppress decrease of a detection speed (processing speed).

In such a fifth embodiment, it is also possible to provide the same effect as that in the above-described first embodiment.

Here, although the elastic layer 5 is formed so as to cover the proximal joint portion 221, the middle joint portion 222 and the distal joint portion 223 over the proximal joint portion 221, the middle joint portion 222 and the distal joint portion 223 in the present embodiment, the present invention is not limited thereto. For example, a plurality of elastic layers 5 are independently disposed on the proximal joint portion 221, the middle joint portion 222 and the distal joint portion 223 as shown in Fig. 11. Namely, the elastic layers 5 may be disposed so as not to be over a boundary portion between the distal joint portion 223 and the middle joint portion 222 and a boundary portion between the middle joint portion 222 and the proximal joint portion 221. With this configuration, it is possible to suppress that the elastic layers 5 are deformed and the markers M are displaced when the middle joint portion 222 is displaced with respect the proximal joint portion 221 or when the distal joint portion 223 is displaced with respect to the middle joint portion 222. Namely, it is possible to suppress the displacement of the markers M caused by force other than the external force at the time of contacting with an outer object and thus it is possible to more accurately detect the external force received by the elastic layer 5.

Further, although the marker M is not disposed in the elastic layers 5 positioned on the rear side of the finger portion 22 in the present embodiment, the present invention is not limited thereto. The marker M may be disposed in this portion to detect the displacement of the marker M in this portion with the detection portion 6. Further, although the marker M is not disposed in the elastic layer 5 positioned on the base portion 21, the present invention is not limited thereto. The marker M may be disposed in this portion to detect the displacement of the marker M in this portion with the detection portion 6.

### <Sixth Embodiment>

Next, a manipulator according to a sixth embodiment of the present invention will be described.

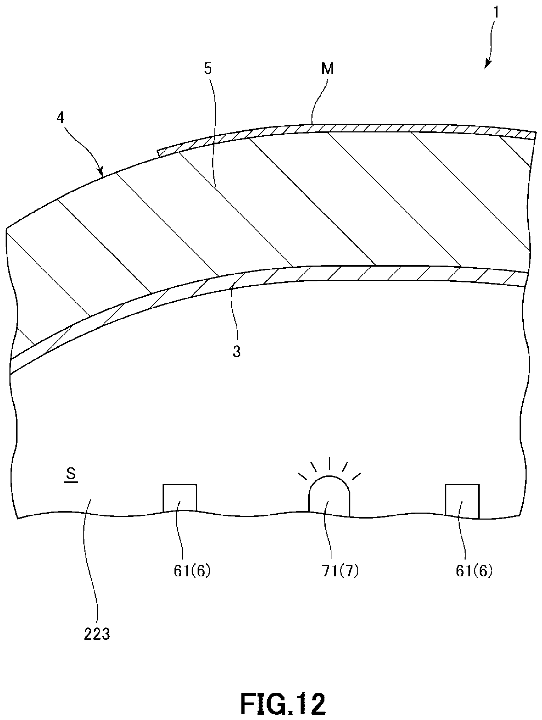

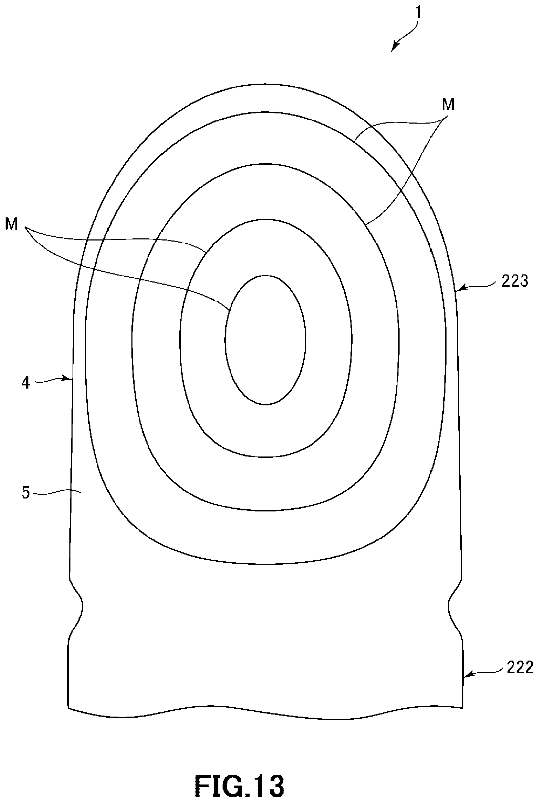

Fig. 12 is a cross-sectional view of the manipulator according to the sixth embodiment of the present invention. Fig. 13 is a cross-sectional view of the manipulator shown in Fig. 12.

The manipulator 1 according to the present embodiment is the same as the manipulator 1 of the above-described first embodiment except that the configuration of the pressure receiving portion 4 is different from that in the above-described first embodiment.

In the following description, the manipulator 1 of the sixth embodiment will be described with a focus on differences from the above-described first embodiment and the description for similar particulars will not be given. Further, in Fig. 12 and Fig. 13, the same components as those in the above-described embodiment are denoted by the same reference numerals and signs.

As shown in Fig. 12, in the manipulator 1 of the present embodiment, the elastic layer 5 is constituted of one layer. Further, the marker M is disposed on the surface of the elastic layer 5. Further, as shown in Fig. 13, a plurality of markers M are disposed and each marker M forms a linear shape. Further, each marker M has elasticity (stretch property). Further, each marker M forms a ring shape and concentrically disposed from a center portion of the distal joint portion 223 in a planar view viewed from the ball portion side of the distal joint portion 223. By forming each marker M in the linear shape as described above, it is possible to easily recognize the displacement of each marker M with the cameras 61 and thus accurately detect the external force applied to the elastic layer 5. Especially, by forming each marker M in the ring shape as described in the present embodiment, this effect becomes more remarkable. For example, each marker M as described above can be constituted of the same material as that of the elastic layer 5.

In such a sixth embodiment, it is also possible to provide the same effect as that in the above-described first embodiment. However, the number of the markers M and the arrangement of the markers M are not particularly limited and may be appropriately set depending on the shape and the size of the distal joint portion 223. For example, some group of the plurality of ring-shaped markers M concentrically disposed may be disposed at different positions. Alternatively, the plurality of ring-shaped markers M concentrically disposed and a plurality of linear markers M radially extending from the center of these ring-shaped markers M may be disposed.

### <Seventh embodiment>

Next, a manipulator according to a seventh embodiment of the present invention will be described.

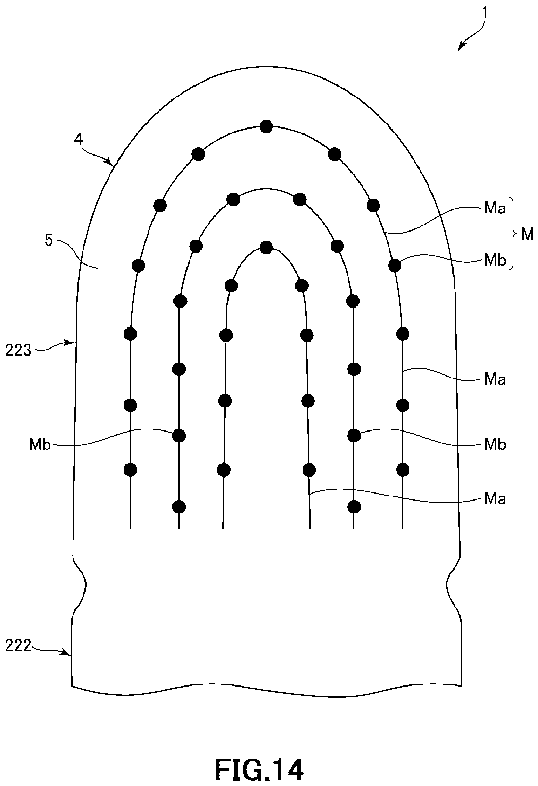

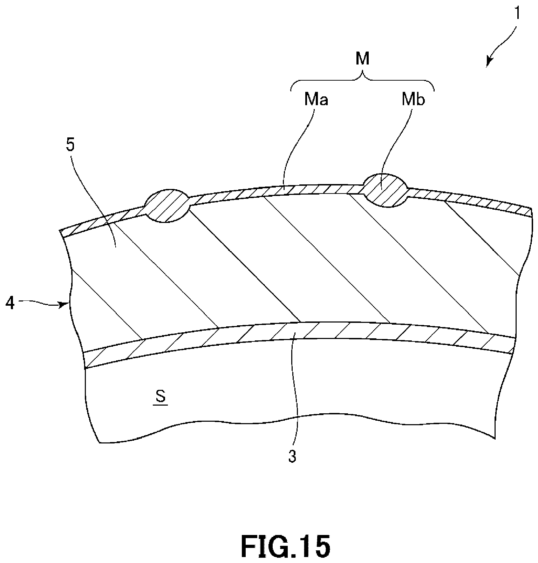

Fig. 14 is a planar view showing the manipulator according to the seventh embodiment of the present invention. Fig. 15 is a cross-sectional view showing the manipulator shown in Fig. 14.

The manipulator 1 according to the present embodiment is the same as the manipulator 1 of the above-described sixth embodiment except that the configuration of the pressure receiving portion 4 is different from that in the above-described sixth embodiment.

In the following description, the manipulator 1 of the seventh embodiment will be described with a focus on differences from the above-described sixth embodiment and the description for similar particulars will not be given. Further, in Fig. 14 and Fig. 15, the same components as those in the above-described embodiment are denoted by the same reference numerals and signs.

As shown in Fig. 14, each marker M of the present embodiment includes a linear portion Ma having a linear shape and a plurality of block portions Mb (expanded portion) disposed on the linear portion Ma. The plurality of block portions Mb are disposed along an extending direction of the linear portion Ma so as to be separated from each other at substantially equal intervals. Further, a width (a length in a direction perpendicular to the extending direction of the linear portion Ma) of each block portion Mb is wider than a width of the linear portion Ma. Further, as shown in Fig. 15, a thickness of each block portion Mb is thicker than a thickness of the linear portion Ma and each block portion Mb protrudes toward the outer side. Further, while the linear portion Ma is relatively soft and has elasticity (stretch property), each block portion Mb is harder than the linear portion Ma and not likely to be elastically deformed. Namely, each block portion Mb has a Young's modulus higher than that of the linear portion Ma. By forming each marker M with this configuration, the displacement of each block portion Mb is allowed because the linear portion Ma is stretched and contracted and thus it is possible to more accurately detect the received pressure on the basis of the displacement of the linear portion Ma and the block portions Mb.

The marker M as described above can be constituted of the materials listed as the constituent material for the elastic layer 5, for example. Further, by forming the linear portion Ma and the block portions Mb with different materials, it is possible to make the linear portion Ma soft and make the block portions Mb hard.

Further, the plurality of markers M are disposed along an outer edge of the distal joint portion 223 so as to form a substantial U-shape in a planar view viewed from the ball portion side of the distal joint portion 223. However, the number of the markers M and the arrangement of the markers M are not particularly limited and may be appropriately set depending on the shape and the size of the distal joint portion 223.

In such a seventh embodiment, it is also possible to provide the same effect as that in the above-described first embodiment.

### <Eighth embodiment>

Next, a manipulator according to an eighth embodiment of the present invention will be described.

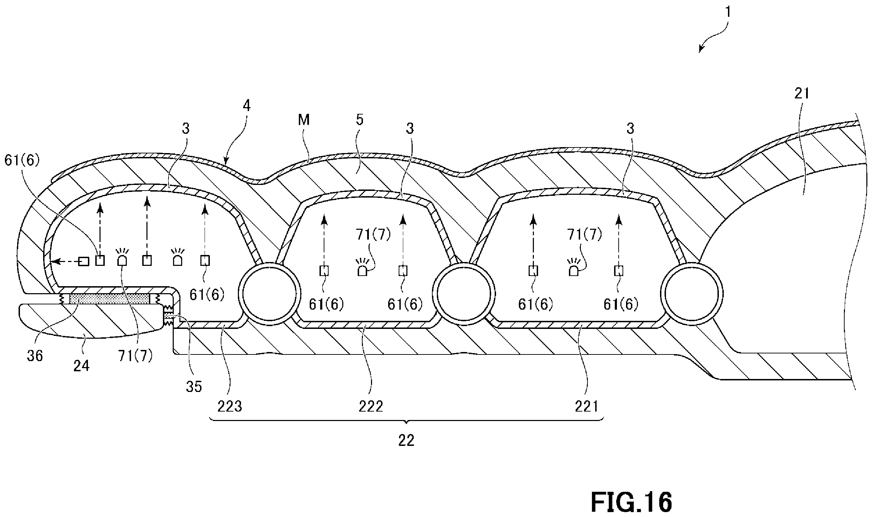

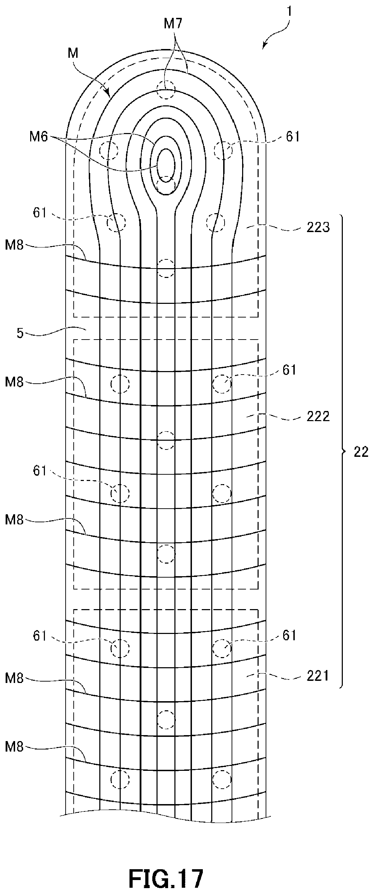

Fig. 16 is a cross-sectional view showing the manipulator according to the eighth embodiment of the present invention. Fig. 17 is a cross-sectional view showing the manipulator shown in Fig. 16.

The manipulator 1 according to the present embodiment is the same as the manipulator 1 of the above-described fifth embodiment except that the configuration of the pressure receiving portion 4 is different from that in the above-described fifth embodiment.

In the following description, the manipulator 1 of the eighth embodiment will be described with a focus on differences from the above-described fifth embodiment and the description for similar particulars will not be given. Further, in Fig. 16 and Fig. 17, the same components as those in the above-described embodiment are denoted by the same reference numerals and signs.

As shown in Fig. 16, in the manipulator 1 of the present embodiment, the elastic layer 5 is constituted of one layer. Further, the marker M is disposed on the surface of the elastic layer 5. Further, as shown in Fig. 17, a plurality of markers M are disposed and each marker M forms a linear shape. Further, each marker M has elasticity (stretch property).

Further, each marker M contains ring markers M6 each disposed on the distal joint portion 223 and having a ring shape, linear markers M7 each surrounding the ring markers M6 and having a substantial U-shape disposed over the middle joint portion 222 and the proximal joint portion 221 or linear markers M8 extending in a width direction of the finger portion 22. Thus, the plurality of markers M are disposed like a finger print of human. By providing the markers M6, M7, M8 having the different shapes and extending in the different directions as described above, it is possible to accurately detect the external force applied to the elastic layer 5. Specifically, for example, even if the external force which does not substantially displace one of the markers M6, M7, M8 is applied, other markers are sufficiently displaced. Namely, at least one of the markers M6, M7, M8 can be reliably displaced by any external force. Thus, it is possible to accurately detect the external force applied to the elastic layer 5.

In such an eighth embodiment, it is also possible to provide the same effect as that in the above-described first embodiment. However, the number of the markers M and the arrangement of the markers M are not particularly limited. For example, additional markers may be disposed in addition to the markers M6, M7, M8.

### <Ninth embodiment>

Next, a manipulator according to a ninth embodiment of the present invention will be described.

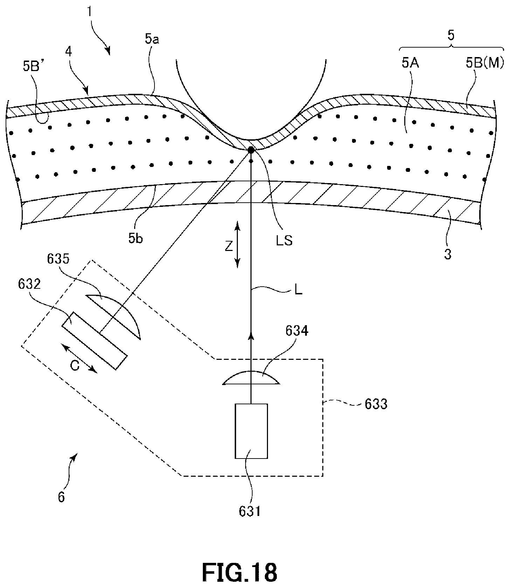

Fig. 18 is a cross-sectional view showing the manipulator according to the ninth embodiment of the present invention.

The manipulator 1 according to the present embodiment is the same as the manipulator 1 of the above-described first embodiment except that the configurations of the pressure receiving portion 4 and the detection portion 6 are different from those in the above-described first embodiment.

In the following description, the manipulator 1 of the ninth embodiment will be described with a focus on differences from the above-described first embodiment and the description for similar particulars will not be given. Further, in Fig. 18, the same components as those in the above-described embodiment are denoted by the same reference numerals and signs.

As shown in Fig. 18, in the manipulator 1 of the present embodiment, the elastic layer 5 includes a light-transmissive layer 5A disposed on the outer circumferential surface of the housing 3 and a light reflection layer 5B laminated on the surface of the light-transmissive layer 5A. The light-transmissive layer 5A has optical transparency. Especially, the light-transmissive layer 5A is substantially colorless and transparent in the present embodiment. On the other hand, the light reflection layer 5B has light reflectivity for reflecting a beam of light L which will be described later. Further, the light-transmissive layer 5A is deformed together with the light reflection layer 5B when the external force is applied and has a function of allowing a shape of an inner surface 5B' of the light reflection layer 5B to change.

The detection portion 6 three-dimensionally detects the deformation of the elastic layer 5 using an optical probe method. By using the optical probe method, it is possible to detect the deformation of the elastic layer 5 in a relatively simple way and with a high degree of accuracy. Hereinafter, the detection portion 6 will be described.

As shown in Fig. 18, the detection portion 6 includes an optical system 633 having a light source 631 which emits the beam of light L toward the inner surface 5B' of the light reflection layer 5B and a semiconductor position detection element 632 (PSD) constituted of a photodiode capable of detecting a one-dimensional position of spot-shaped light on a light receiving surface. In this regard, the light source 631 is not particularly limited. For example, a laser diode (LD) can be used as the light source 631.

The beam of light L emitted from the light source 631 is narrowed to a fine light flux by a lens system 634 and an optical spot LS is formed on the inner surface 5B' of the light reflection layer 5B. The image of this optical spot LS is formed on a surface of the semiconductor position detection element 632 by a lens system 635. In such a configuration, the amount of a relative displacement Z between the optical system 633 and the optical spot LS is observed as the amount of movement C of the image on the surface of the semiconductor position detection element 632. That is, it is possible to obtain the amount of the relative displacement Z from the amount of the movement C and to obtain a coordinate value of a portion on which the optical spot LS of the inner surface 5B' is formed.

With the detection portion 6 having the configuration as described above, the coordinate value of each portion of the inner surface 5B' in the natural state can be stored as a reference coordinate value and this reference coordinate value and the coordinate value of each portion of the inner surface 5B' are compared with each other in real time, thereby allowing the deformation of the inner surface 5B' to be detected, for example. Further, the detection portion 6 can detect the deformation of the elastic layer 5, that is, the external force received by the elastic layer 5, on the basis of the deformation of the inner surface 5B'.

In this regard, since the detection portion 6 detects the deformation of the elastic layer 5 on the basis of the deformation of the inner surface 5B' as described above, it is preferable that the light reflection layer 5B is thin. For example, it is preferable that a thickness of the light reflection layer 5B is thinner than a thickness of the light-transmissive layer 5A. With this configuration, it is possible to dispose the inner surface 5B' close to the outer surface 5a of the elastic layer 5. Thus, the inner surface 5B' can be deformed more accurately and more drastically with respect to the external force. Therefore, the detection accuracy of the detection portion 6 is improved. For this reason, in the present embodiment, it can be also said that the light reflection layer 5B serves as the marker M.

As described above, the elastic layer 5 includes the light reflection layer 5B having the light reflectivity and the light-transmissive layer 5A which is located on the inner side of the light reflection layer 5B and has the optical transparency in the present embodiment. With this configuration, since the light-transmissive layer 5A allows the inner surface 5B' of the light reflection layer 5B to be deformed and transmits the beam of light L, the deformation of the elastic layer 5 can be detected by using the optical probe method even from the inside of the housing 3.

In such a ninth embodiment, it is also possible to provide the same effect as that in the above-described first embodiment. In this regard, the detection portion 6 may obtain the coordinate value of each portion of the inner surface 5B' using one optical system 633 and may obtain the coordinate value of each portion of the inner surface 5B' using a plurality of optical systems 633.

### <Tenth embodiment>

Next, a manipulator according to a tenth embodiment of the present invention will be described.

Fig. 16 is a cross-sectional view showing the manipulator according to the tenth embodiment of the present invention.

The manipulator 1 according to the present embodiment is the same as the manipulator 1 of the above-described ninth embodiment except that the configurations of the pressure receiving portion 4 and the detection portion 6 are different from those in the above-described ninth embodiment.

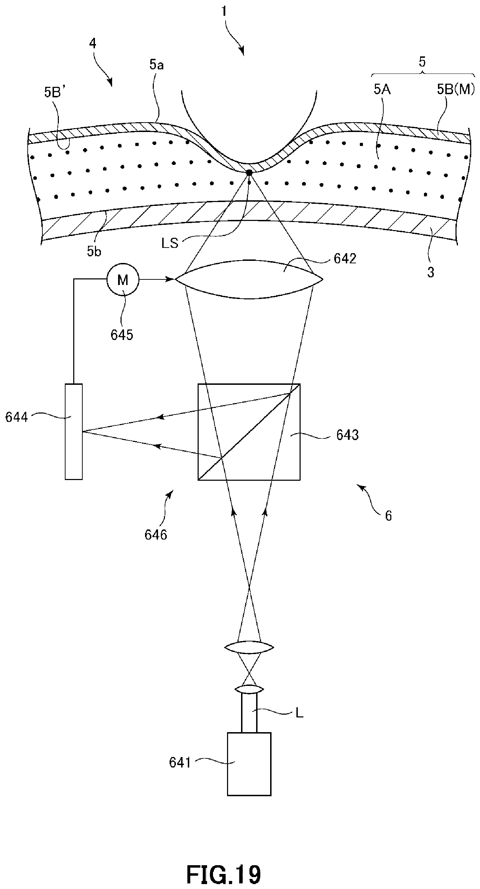

In the following description, the manipulator 1 of the tenth embodiment will be described with a focus on differences from the above-described ninth embodiment and the description for similar particulars will not be given. Further, in Fig. 19, the same components as those in the above-described embodiment are denoted by the same reference numerals and signs.

The detection portion 6 of the present embodiment three-dimensionally detects the deformation of the elastic layer 5 using the optical probe method. Hereinafter, the detection portion 6 will be described.

As shown in Fig. 19, the detection portion 6 includes an optical system 646 having a light source 641 (for example, LD) which emits the beam of light L toward the inner surface 5B' of the light reflection layer 5B, a lens system 642 which focuses the beam of light L, a beam splitter 643 disposed between the light source 641 and the lens system 642, a detector 644 (photodiode) and a motor 645 which moves the lens system 642.

The beam of light L light emitted from the light source 641 is focused by the lens system 642 to form an optical spot LS on the inner surface 5B' of the light reflection layer 5B. An image of the beam of light L reflected from the inner surface 5B' is formed after the beam of light L is reflected from the beam splitter 643 through the lens system 642. The detector 644 is disposed at an image formation point. In addition, the lens system 642 is moved in an optical axis direction thereof by the motor 645 so that the image formation point is always located at the detector 644. A coordinate value of a portion on which the optical spot LS of the inner surface 5B' is formed can be obtained on the basis of the amount of movement of the lens system 642 at this time.

With the detection portion 6 having the configuration as described above, the coordinate value of each portion of the inner surface 5B' in the natural state can be stored as a reference coordinate value and this reference coordinate value and the coordinate value of each portion of the inner surface 5B' are compared with each other in real time, thereby allowing the deformation of the inner surface 5B' to be detected, for example. Further, the detection portion 6 can detect the deformation of the elastic layer 5, that is, the external force received by the elastic layer 5, on the basis of the deformation of the inner surface 5B'.

In such a tenth embodiment, it is also possible to provide the same effect as that in the above-described first embodiment. In this regard, although the detection portion 6 obtains the coordinate value of each portion of the inner surface 5B' using one optical system 646, the detection portion 6 may obtain the coordinate value of each portion of the inner surface 5B' using a plurality of optical systems 646.

### <Eleventh embodiment>

Next, a manipulator according to an eleventh embodiment of the present invention will be described.

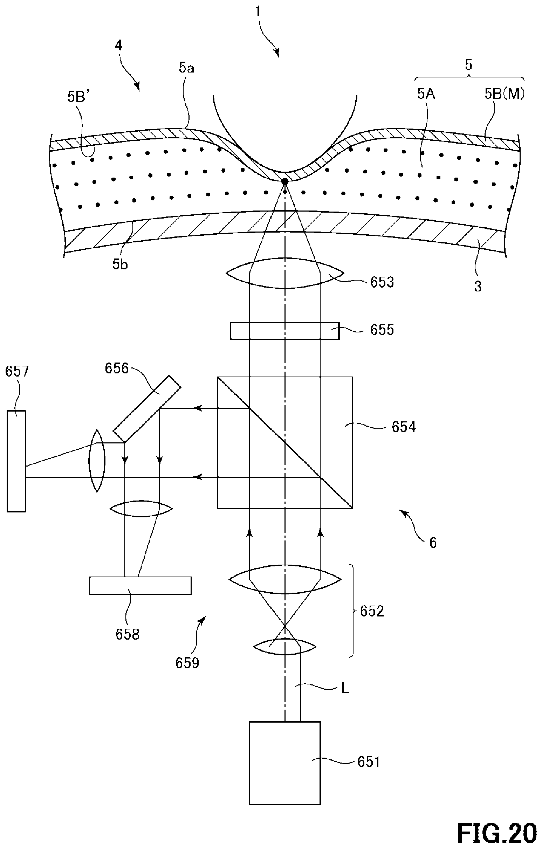

Fig. 20 is a cross-sectional view showing the manipulator according to the eleventh embodiment of the present invention.

The manipulator 1 according to the present embodiment is the same as the manipulator 1 of the above-described ninth embodiment except that the configurations of the pressure receiving portion 4 and the detection portion 6 are different from those in the above-described ninth embodiment.

n the following description, the manipulator 1 of the eleventh embodiment will be described with a focus on differences from the above-described ninth embodiment and the description for similar particulars will not be given. Further, in Fig. 20, the same components as those in the above-described embodiment are denoted by the same reference numerals and signs.

The detection portion 6 of the present embodiment three-dimensionally detects the deformation of the elastic layer 5 using the optical probe method. Hereinafter, the detection portion 6 will be described.

As shown in Fig. 20, the detection portion 6 includes an optical system 659 having a light source 651 (for example, LD) which emits the beam of light L toward the inner surface 5B' of the light reflection layer 5B, a lens system 652 which adjusts the beam of light L to make the beam of light L enlarged parallel light, a lens system 653 which focuses the beam of light L that has passed through the lens system 652, a polarization beam splitter 654 located between the lens systems 652 and 653, a λ/4 plate 655 located between the polarization beam splitter 654 and the lens system 653, a wave-front splitting mirror 656 which splits the beam of light L reflected from the inner surface 5B', a first detector 657 (photodiode) which receives one beam of light L split by the wave-front splitting mirror 656 and a second detector 658 (photodiode) which receives the other beam of light L.

With this configuration, in a case where the inner surface 5B' is displaced from the focal position of the lens system 653, a reflected light flux changes and a difference occurs between the amounts of light received by the first and second detectors 657 and 658. Therefore, a coordinate value of a portion of the inner surface 5B' which is irradiated with the beam of light L can be obtained on the basis of this difference.

With the detection portion 66 having the configuration as described above, the coordinate value of each portion of the inner surface 5B' in the natural state can be stored as a reference coordinate value and this reference coordinate value and the coordinate value of each portion of the inner surface 50B' are compared with each other in real time, thereby allowing the deformation of the inner surface 5B' to be detected, for example. Further, the detection portion 6 can detect the deformation of the elastic layer 5, that is, the external force received by the elastic layer 5, on the basis of the deformation of the inner surface 5B'.

In such an eleventh embodiment, it is also possible to provide the same effect as that in the above-described first embodiment. Meanwhile, although the detection portion 6 obtains the coordinate value of each portion of the inner surface 5B' using one optical system 659, the detection portion 6 may obtain the coordinate value of each portion of the inner surface 5B' using a plurality of optical systems 659.

### <Twelfth embodiment>

Next, a manipulator according to a twelfth embodiment of the present invention will be described.

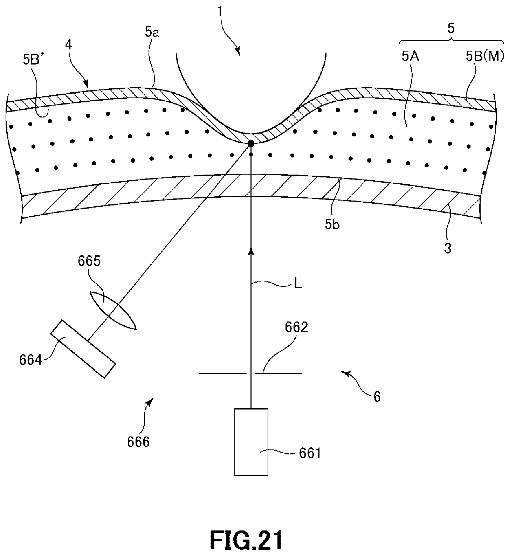

Fig. 21 is a cross-sectional view showing the manipulator according to the twelfth embodiment of the present invention.

The manipulator 1 according to the present embodiment is the same as the manipulator 1 of the above-described ninth embodiment except that the configurations of the pressure receiving portion 4 and the detection portion 6 are different from those in the above-described ninth embodiment.

In the following description, the manipulator 1 of the twelfth embodiment will be described with a focus on differences from the above-described ninth embodiment and the description for similar particulars will not be given. Further, in Fig. 21, the same components as those in the above-described embodiment are denoted by the same reference numerals and signs.

The detection portion 6 of the present embodiment three-dimensionally detects the deformation of the elastic layer 5 using a cross-section measurement method, particularly, a light-section method. Specifically, the inner surface 5B' is irradiated with a slit-shaped beam of light L and the deformation of the elastic layer 5 is detected on the basis of the shape of the beam of light L formed on the inner surface 5B' . By using such a cross-section measurement method (light-section method), it is possible to detect the deformation of the elastic layer 5 in a relatively simple way and with a high degree of accuracy.

As shown in Fig. 21, the detection portion 6 includes an optical system 666 having a light source 661 which emits the beam of light L toward the inner surface 5B' of the light reflection layer 5B, a slit light formation portion 662 which forms the beam of light L in a slit shape, an imaging element 664 which is provided at a position shifted from the optical axis of the beam of light L and captures an image of the slit-shaped beam of light L formed on the inner surface 5B' and a lens system 665 located between the inner surface 5B' and the imaging element 664.

With this configuration, a cross-sectional shape of a portion of the inner surface 5B' on which the image of the beam of light L is formed can be obtained on the basis of the image obtained by the imaging element 664, that is, the shape of the beam of light L formed on the inner surface 5B'. With this configuration, by scanning the entire inner surface 5B' with the slit-shaped beam of light L to obtain the cross-sectional shape of each portion of the inner surface 5B', it is possible to detect the shape of the inner surface 50B', for example.

With the detection portion 6 having the configuration as described above, the shape of the inner surface 5B' in the natural state can be stored as a reference shape and this reference shape and the shape of the inner surface 5B' are compared with each other in real time, thereby allowing the deformation of the inner surface 5B' to be detected, for example. Further, the detection portion 6 can detect the deformation of the elastic layer 5, that is, the external force received by the elastic layer 5, on the basis of the deformation of the inner surface 5B'.

In such an eleventh embodiment, it is also possible to provide the same effect as that in the above-described first embodiment. In this regard, although the detection portion 6 detects the shape of the entire inner surface 5B' using one optical system 666, the detection portion 6 may detect the shape of the entire inner surface 5B' using a plurality of optical systems 666.

### <Thirteenth embodiment>

Next, a manipulator according to a thirteenth embodiment of the present invention will be described.

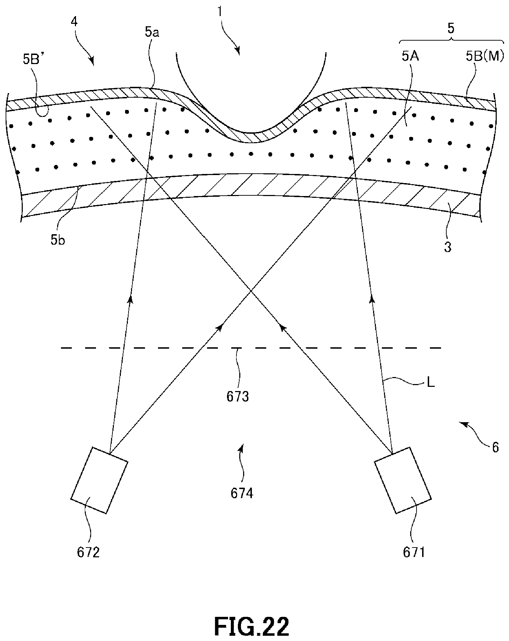

Fig. 22 is a cross-sectional view showing the manipulator according to the thirteenth embodiment of the present invention.

The manipulator 1 according to the present embodiment is the same as the manipulator 1 of the above-described ninth embodiment except that the configurations of the pressure receiving portion 4 and the detection portion 6 are different from those in the above-described ninth embodiment.

In the following description, the manipulator 1 of the thirteenth embodiment will be described with a focus on differences from the above-described ninth embodiment and the description for similar particulars will not be given. Further, in Fig. 22, the same components as those in the above-described embodiment are denoted by the same reference numerals and signs.

The detection portion 6 of the present embodiment three-dimensionally detects the deformation of the elastic layer 5 using a contour measurement method, particularly, using a moire topography method in which a moire fringe is used. Specifically, a moire fringe image of the inner surface 5B' is obtained and the deformation of the elastic layer 5 is detected on the basis of this moire fringe image. By using such a contour measurement method, it is possible to detect the deformation of the elastic layer 5 in a relatively simple way and with a high degree of accuracy. Hereinafter, the detection portion 6 will be simply described. In this regard, the light source 7 is omitted in the present embodiment.

As shown in Fig. 22, the detection portion 6 includes an optical system 674 having a light source 671 which emits the beam of light L, an imaging element 672 and a lattice 673 provided between a plane of the light source 671 and the imaging element 672 and the inner surface 5B'.

In this configuration, a portion at which the beam of light L emitted from the light source 671 through the lattice 673 and a portion seen by the imaging element 672 through the lattice 673 intersect each other and this portion is captured by the imaging element 672. A substantial contour surface is formed on a surface formed by linking these intersection points and a moire fringe corresponding to the contour surface is formed in the image obtained by the imaging element 672. In a case of using this image as the moire fringe image, the shape of the inner surface 5B' can be obtained on the basis of the moire fringe image.

With the detection portion 6 having the configuration as described above, the shape of the inner surface 5B' in the natural state can be stored as a reference shape and this reference shape and the shape of the inner surface 5B' obtained in real time are compared with each other, thereby allowing the deformation of inner surface 5B' to be detected, for example. Further, the detection portion 6 can detect the deformation of the elastic layer 5, that is, the external force received by the elastic layer 5, on the basis of the deformation of the inner surface 5B'.

In such a thirteenth embodiment, it is also possible to provide the same effect as that in the above-described first embodiment. Meanwhile, although the detection portion 6 detects the shape of the entire inner surface 5B' using one optical system 674, the detection portion 6 may detect the shape of the entire inner surface 5B' using a plurality of optical systems 674.

### <Fourteenth embodiment>

Next, a manipulator according to a fourteenth embodiment of the present invention will be described.

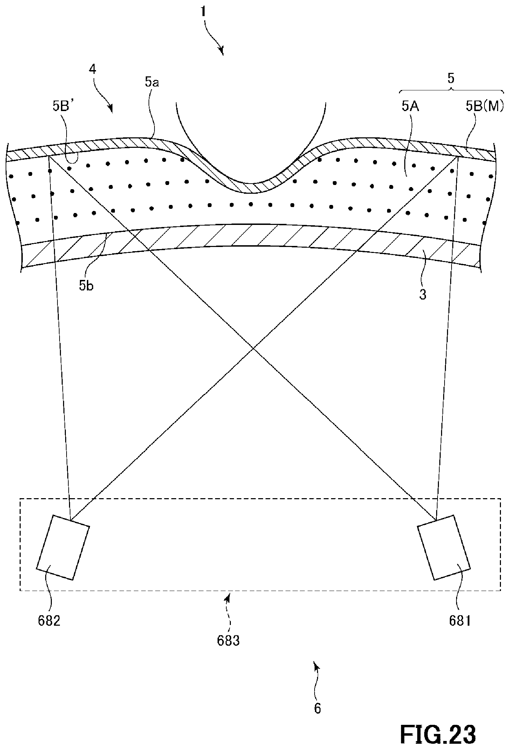

Fig. 23 is a cross-sectional view showing the manipulator according to the fourteenth embodiment of the present invention.

The manipulator 1 according to the present embodiment is the same as the manipulator 1 of the above-described ninth embodiment except that the configurations of the pressure receiving portion 4 and the detection portion 6 are different from those in the above-described ninth embodiment.

In the following description, the manipulator 1 of the fourteenth embodiment will be described with a focus on differences from the above-described ninth embodiment and the description for similar particulars will not be given. Further, in Fig. 23, the same components as those in the above-described embodiment are denoted by the same reference numerals and signs.

The detection portion 6 of the present embodiment detects the deformation of the elastic layer 5 using a pattern projection method. By using the pattern projection method, it is possible to detect the deformation of the elastic layer 5 in a relatively simple way and with a high degree of accuracy. Hereinafter, the detection portion 6 will be simply described.

As shown in Fig. 23, the detection portion 6 includes an optical system 683 having an image projection unit 681 which projects a reference pattern consisting of the beam of light L onto the inner surface 5B' and an imaging element 682 which captures an image of the reference pattern projected onto the inner surface 5B' from a position shifted from the optical axis of the image projection unit 681. In this configuration, a shape of a portion of the inner surface 5B' onto which the reference pattern is projected can be detected on the basis of the shape of the reference pattern formed in the image obtained by the imaging element 682. With this configuration, by projecting the reference pattern onto an entire or the like of the inner surface 5B', it is possible to detect the shape of the inner surface 5B'. In this regard, the reference pattern which is projected onto the inner surface 5B' is not particularly limited. The reference pattern may have a lattice-shaped pattern in which parallel straight lines are lined up in a state of being separated from each other, for example.

With the detection portion 6 having the configuration as described above, the shape of the inner surface 5B' in the natural state can be stored as a reference shape and this reference shape and the shape of the inner surface 5B' obtained in real time are compared with each other, thereby allowing the deformation of the inner surface 5B' to be detected, for example. Further, the detection portion 6 can detect the deformation of the elastic layer 5, that is, the external force received by the elastic layer 5, on the basis of the deformation of the inner surface 5B'.

In such a fourteenth embodiment, it is also possible to provide the same effect as that in the above-described first embodiment. In this regard, the detection portion 6 may detect the shape of the entire inner surface 5B' using one optical system 683 and may detect the shape of the entire inner surface 5B' using a plurality of optical systems 683.

### <Fifteenth embodiment>

Next, a manipulator according to a fifteenth embodiment of the present invention will be described.

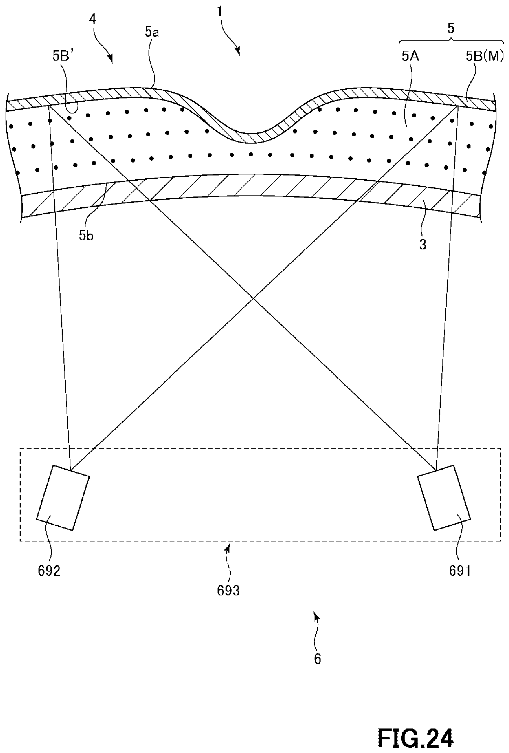

Fig. 24 is a cross-sectional view showing the manipulator according to the fifteenth embodiment of the present invention.

The manipulator 1 according to the present embodiment is the same as the manipulator 1 of the above-described ninth embodiment except that the configurations of the pressure receiving portion 4 and the detection portion 6 are different from those in the above-described ninth embodiment.

In the following description, the manipulator 1 of the fifteenth embodiment will be described with a focus on differences from the above-described ninth embodiment and the description for similar particulars will not be given. Further, in Fig. 24, the same components as those in the above-described embodiment are denoted by the same reference numerals and signs.

The detection portion 6 of the present embodiment detects the deformation of the elastic layer 5 using a phase shift method. By using such a phase shift method, it is possible to detect the deformation of the elastic layer 5 in a relatively simple way and with a high degree of accuracy. Hereinafter, the detection portion 6 will be simply described.

As shown in Fig. 24, the detection portion 6 includes an optical system 693 having an image projection unit 691 which projects a reference pattern onto the inner surface 5B' and an imaging element 692 which captures an image of the reference pattern projected onto the inner surface 5B' from a position shifted from the optical axis of the image projection unit 691.

In this configuration, a fringe pattern in which a sine wave is represented by the light and darkness of the luminance value is projected onto the inner surface 5B' as the reference pattern, for example. Further, the reference pattern projected onto the inner surface 5B' is captured by the imaging element 692. The reference pattern is projected four times by shifting n/2 and captured every time by the imaging element 692. A shape of a portion of the inner surface 5B' onto which the reference pattern is projected can be detected from the four images obtained in this manner. In this regard, the reference pattern, the way to shift the reference pattern and the like are not particularly limited.

With the detection portion 6 having the configuration as described above, the shape of the inner surface 5B' in the natural state can be stored as a reference shape and this reference shape and the shape of the inner surface 5B' obtained in real time are compared with each other, thereby allowing the deformation of inner surface 5B' to be detected, for example. Further, the detection portion 6 can detect the deformation of the elastic layer 5, that is, the external force received by the elastic layer 5, on the basis of the deformation of the inner surface 5B'.

In such a fifteenth embodiment, it is also possible to provide the same effect as that in the above-described first embodiment. Meanwhile, the detection portion 6 may detect the shape of the entire inner surface 5B' using one optical system 693 and may detect the shape of the entire inner surface 5B' using a plurality of optical systems 693.

In this regard, in the above-described ninth embodiment to the present embodiment, although the methods of detecting the change in the shape of the inner surface 5B' using the optical method and the methods of detecting the external force received by the elastic layer 5 have been described, the methods of detecting the change in the shape of the inner surface 5B' are not limited to the eleventh embodiment to the present embodiment. That is, as long as the shape of the inner surface 5B' can be detected, any kind of method can be used. For example, in a case of using a method so-called "point measurement method", an ultrasonic wave method using an ultrasonic probe, a magnetic method using magnetism or the like can be used in addition to the optical probe method described in the aforementioned ninth, tenth and eleventh embodiments. In addition, in a case of using a method so-called "surface measurement method", it is possible to use a silhouette method, an optical envelope method, a cross-sectional measurement method including the light-section method or the like described in the above-described fourteenth embodiment, an interference fringe method, a holography method and a contour measurement method including the moire topography method or the like of the above-described thirteenth embodiment.

### <Sixteenth embodiment>

Next, a manipulator according to a sixteenth embodiment of the present invention will be described.

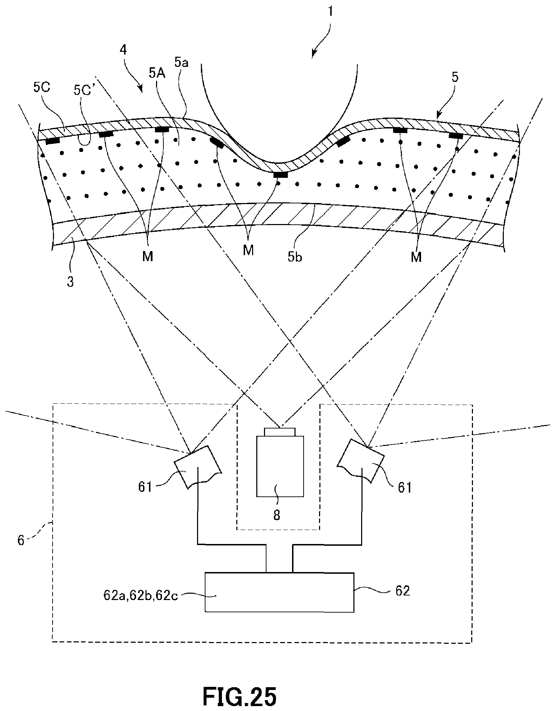

Fig. 25 is a cross-sectional view showing the manipulator according to the sixteenth embodiment of the present invention.

The manipulator 1 according to the present embodiment is the same as the manipulator 1 of the above-described first embodiment except that the configurations of the pressure receiving portion 4 and the detection portion 6 are different from those in the above-described first embodiment.

In the following description, the manipulator 1 of the sixteenth embodiment will be described with a focus on differences from the above-described first embodiment and the description for similar particulars will not be given. Further, in Fig. 25, the same components as those in the above-described embodiment are denoted by the same reference numerals and signs.

As shown in Fig. 25, in the manipulator 1 of the present embodiment, the elastic layer 5 includes a light-transmissive layer 5A disposed on the outer circumferential surface of the housing 3 and an image display layer 5C laminated on the surface of the light-transmissive layer 5A. The light-transmissive layer 5A has optical transparency. Especially, the light-transmissive layer 5A is substantially colorless and transparent in the present embodiment. On the other hand, the image display layer 5C is a layer having light reflectivity, on which an image can be displayed by light emitted from an image projection unit 8 described later. The light-transmissive layer 5A is deformed together with the image display layer 5C when the external force is applied to the image display layer 5C and has a function of allowing a shape of an inner surface 5C' of the image display layer 5C to change.

Further, the manipulator 1 of the present embodiment includes the image projection unit 8 disposed within the housing 3. Meanwhile, although the image projection unit 8 is not particularly limited. For example, the image projection unit 8 can be configured to include a liquid crystal type projector, an optical scanning type projector or the like.

A predetermined image is displayed on the inner surface 5C' of the image display layer 5C with the light emitted from the image projection unit 8. Especially, markers M are displayed on the inner surface 5C' of the image display layer 5C by the image projection unit 8 in the present embodiment. That is, in the manipulator 1 of the present embodiment, by displaying the markers M on the inner surface 5C', the markers M can be disposed on the elastic layer 5. Thereby, since the pattern of the markers M can be changed in accordance with a purpose, the manipulator 1 can provide excellent convenience.

Since such markers M are displaced in association with the deformation of the inner surface 5C', the detection portion 6 can detect the deformation of the inner surface 5C' by detecting the displacement of the markers M. Further, the detection portion 6 can detect the deformation of the elastic layer 5, that is, the external force received by the elastic layer 5, on the basis of the deformation of the inner surface 5C'.

In such a sixteenth embodiment, it is also possible to provide the same effect as that in the above-described first embodiment.

### <Seventeenth embodiment>

Next, a manipulator according to a seventeenth embodiment of the present invention will be described.

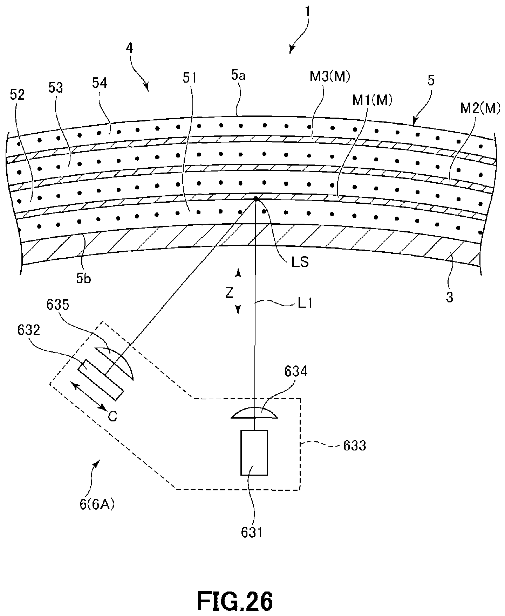

Each of Fig. 26 to Fig. 28 is a cross-sectional view showing the manipulator according to the seventeenth embodiment of the present invention.

The manipulator 1 according to the present embodiment is the same as the manipulator 1 of the above-described first embodiment except that the configurations of the pressure receiving portion 4 and the detection portion 6 are different from those in the above-described first embodiment.

In the following description, the manipulator 1 of the seventeenth embodiment will be described with a focus on differences from the above-described ninth embodiment and the description for similar particulars will not be given. Further, in Fig. 26 to Fig. 28, the same components as those in the above-described embodiment are denoted by the same reference numerals and signs.

As shown in Fig. 26, in the manipulator 1 of the present embodiment, a first marker M1 formed in a film shape (sheet shape) is disposed between the first elastic layer 51 and the second elastic layer 52. In addition, a second marker M2 formed in a film shape (sheet shape) is disposed between the second elastic layer 52 and the third elastic layer 53. In addition, a third marker M3 formed in a film shape (sheet shape) is disposed between the third elastic layer 53 and the protective layer 54. Each of these first, second and third markers M1, M2, M3 is deformed in association with the deformation of the elastic layer 5.

Further, each of the first marker M1, the second marker M2 and the third marker M3 reflects light having a specific wavelength and transmits light having the other wavelengths than the specific wavelength. In addition, the first marker M1, the second marker M2 and the third marker M3 are configured to reflect different light each having different wavelengths with each other. As each of the first marker M1, the second marker M2 and the third marker M3, an optical filter such as a dichroic filter can be used, for example.

Further, the manipulator 1 of the present embodiment includes the detection portion 6 used in the above-described ninth embodiment. Further, as shown in Fig. 26 to Fig. 28, the detection portion 6 includes a first detection portion 6A which detects the deformation of the first marker M1, a second detection portion 6B which detects the deformation of the second marker M2 and a third detection portion 6C which detects the deformation of the third marker M3.

As shown in Fig. 26, in the first detection portion 6A, the beam of light L1 having a wavelength which can be reflected from the first marker M1 is emitted from the light source 631. On the other hand, the semiconductor position detection element 632 has a bandpass filter (not shown) disposed therein, which transmits the beam of light L1 and prevents beams of light L2 and L3 described later from being transmitted. Therefore, the first detection portion 6A can detect the deformation of the first marker M1 using the beam of light L1. In this first detection portion 6A, the coordinate value of each portion of the first marker M1 in the natural state can be stored as a reference coordinate value and this reference coordinate value and the coordinate value of each portion of the first marker M1 are compared with each other in real time, thereby allowing the deformation of the first marker M1 to be detected, for example.

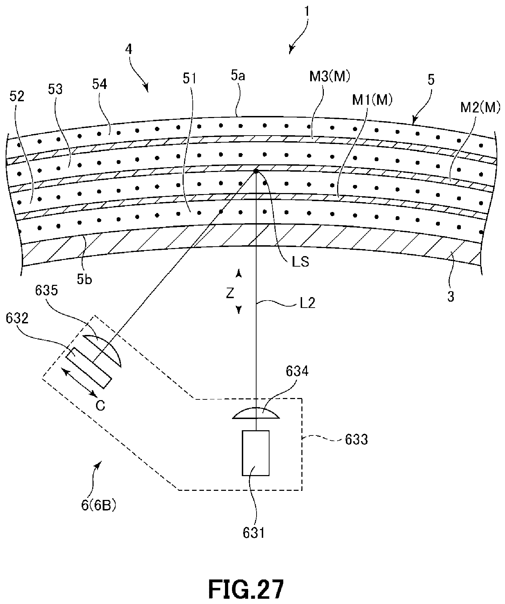

Further, as shown in Fig. 27, in the second detection portion 6B, the beam of light L2 having a wavelength which can be reflected from the second marker M2 is emitted from the light source 631. In this regard, this beam of light L2 can pass through the first marker M1. On the other hand, the semiconductor position detection element 632 has a bandpass filter (not shown) disposed therein, which transmits the beam of light L2 and prevents the beams of light L1 and L3 from being transmitted. Therefore, the second detection portion 6B can detect the deformation of the second marker M2 using the beam of light L2. In this second detection portion 6B, the coordinate value of each portion of the second marker M2 in the natural state can be stored as a reference coordinate value and this reference coordinate value and the coordinate value of each portion of the second marker M2 are compared with each other in real time, thereby allowing the deformation of the second marker M2 to be detected, for example.

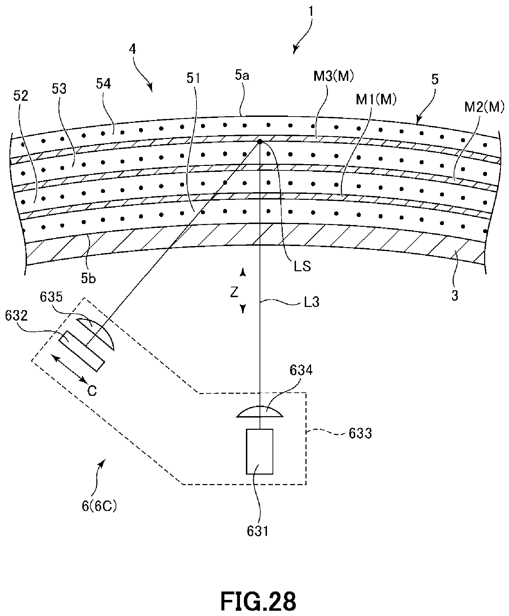

Further, as shown in Fig. 28, in the third detection portion 6C, the beam of light L3 having a wavelength which can be reflected from the third marker M3 is emitted from the light source 631. In this regard, this beam of light L3 can pass through the first marker M1 and the second marker M2. On the other hand, the semiconductor position detection element 632 has a bandpass filter (not shown) disposed therein, which transmits the beam of light L3 and prevents the beams of light L1 and L2 from being transmitted. Therefore, the third detection portion 6C can detect the deformation of the third marker M3 using the beam of light L3. In this third detection portion 6C, the coordinate value of each portion of the third marker M3 in the natural state can be stored as a reference coordinate value and this reference coordinate value and the coordinate value of each portion of the third marker M3 are compared with each other in real time, thereby allowing the deformation of the third marker M3 to be detected, for example.

With the detection portion 6 having the configuration as described above, the deformation of the elastic layer 5, that is the external force received by the elastic layer 5 can be detected on the basis of the deformation of the first marker M1 detected in the first detection portion 6A, the deformation of the second marker M2 detected in the second detection portion 6B and the deformation of the third marker M3 detected in the third detection portion 6C.

In such a seventeenth embodiment, it is also possible to provide the same effect as that in the above-described first embodiment. In this regard, although the present embodiment includes the three detection portions 6A, 6B, 6C, the present invention is not limited thereto. It is possible to take a configuration in which only one detection portion 6 is used. In this case, for example, the light source 631 may be configured to emit the beams of light L1, L2 and L3 and periodically switch the beams of light L1, L2 and L3. Further, the deformation of the first, second and third markers M1, M2, M3 may be detected in a time-division manner.

Further, for example, the detection portion 6 may take one of the configurations as described in the above-described tenth embodiment to fifteenth embodiment.

### <Eighteenth embodiment>

Next, a manipulator according to an eighteenth embodiment of the present invention will be described.

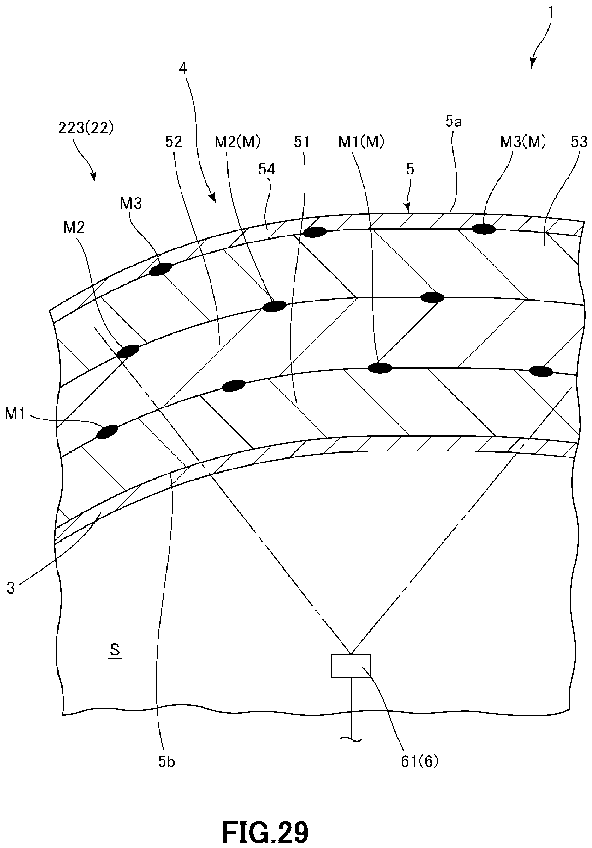

Fig. 29 is a cross-sectional view showing the manipulator according to the eighteenth embodiment of the present invention.

The manipulator 1 according to the present embodiment is the same as the manipulator 1 of the above-described first embodiment except that the configuration of the detection portion 6 are different from that in the above-described first embodiment.

In the following description, the manipulator 1 of the eighteenth embodiment will be described with a focus on differences from the above-described first embodiment and the description for similar particulars will not be given. Further, in Fig. 29, the same components as those in the above-described embodiment are denoted by the same reference numerals and signs.

As shown in Fig. 29, the detection portion 6 of the present embodiment is configured to detect the displacement of each marker M with only one camera 61. Further, it is preferable that a camera having a narrow depth of field (DOF) and a focusing function is used as the camera 61. The depth of field is not particularly limited, but the depth of field is preferably narrow so that the focus of the camera 61 cannot be kept when each marker M is displaced depending on a required detection accuracy. With the detection portion 6 having the configuration as described above, it is possible to detect the displacement of each marker M with utilizing the shift of the focus caused by the displacement of each marker M.

For example, the detection portion 6 stores a condition of lens of the camera 61 (position of a focusing lens) in a state that the focus is on each marker M in the natural state as a reference state. Further, the detection portion 6 detects a condition of the lens of the camera 61 for each marker M in the state that the focus is on each marker M in real time. The detection portion 6 can compare the condition of the lens detected in real time with the reference condition to detect the displacement amount of each marker M in an optical axis direction of the camera 61 with respect to the natural state. Further, the detection portion 6 can detect the shift of each marker M in a direction perpendicular to the optical axis from the image captured by the camera 61 and detect the three-dimensional displacement of each marker M on the basis of these information. With this configuration, the detection portion 6 can detect the deformation of the elastic layer 5, that is the external force received by the elastic layer 5.

In such an eighteenth embodiment, it is also possible to provide the same effect as that in the above-described first embodiment. In this regard, although the detection portion 6 uses the camera 61 having the focusing function, the present invention is not limited thereto. The camera 61 may not have the focusing function. In this case, the detection portion 6 may be configured to focus on each marker M by moving the camera 61 itself in the optical axis direction thereof and detect the displacement of each marker M in the optical direction on the basis of a movement distance of the camera 61 at this time.

### <Nineteenth embodiment>

Next, a robot according to a ninteenth embodiment of the present invention will be described.

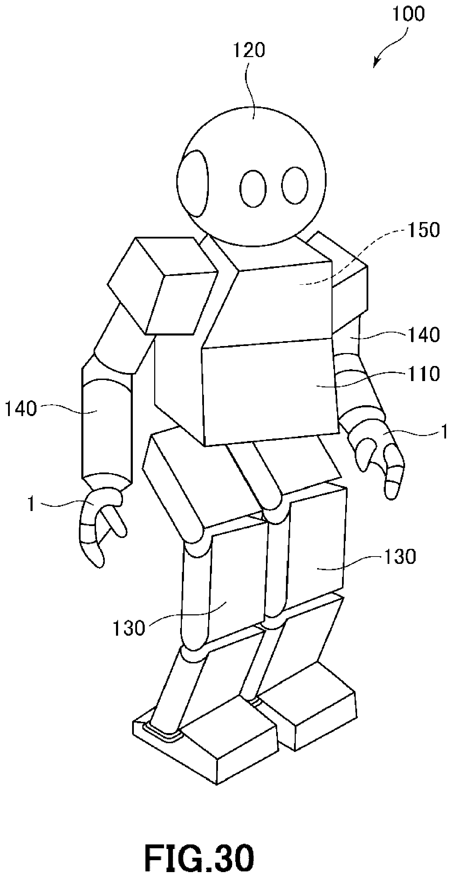

Fig. 30 is a perspective view showing the robot according to the nineteenth embodiment of the present invention.

As shown in Fig. 30, the robot 100 is a humanoid-type robot and contains a body 110, a head 120, two legs 130 having joints, two arms 140 having joints, the manipulators 1 respectively connected to tip end portions of the arms 140 and a robot control unit 150 for controlling drive of each component. The robot 100 as described above can perform bipedal walking by driving the legs 130. In this regard, in the present embodiment, the robot 100 is used as a nursing care robot.

One example of a specific use method of the robot 100 as described above will be explained. For example, in a state that a care receiver lies on a bed, the robot 100 slides the manipulator 1 into a space between the bed and the care receiver in a state that the ball portion side of the finger portions 22 is directed toward the vertically upper direction. At this time, the detection portion 6 detects the pressure received by the pressure receiving portion 4 and the first and second pressure-sensitive elements 35, 36 detect the external force received by the movable portion 24, and thereby it is possible to determine whether or not the distal joint portion 24 gets caught by a bed sheet or a cloth of the care receiver and whether or not the distal joint portion 223 hits a body of the care receiver. Further, in a case where the above-mentioned situation occurs, the control unit 23 moves appropriate finger portions 22 to solve the above-mentioned situation. By performing the control as described above, it is possible to smoothly slide the manipulator 1 into the space between the bed and the care receiver.

Further, when the ball portion of each finger portion 22 is sandwiched between the bed and the care receiver, the external force is applied to the ball portion of each finger portion 22. By detecting this external force on the basis of the displacement of the marker M as described above, it is possible to detect which finger portion 22 receives the external force, how large the external force is and which direction the external force is applied. Thus, for example, if large external force is applied to one or more of the finger portions 22 or only small external force is applied to one or more of the finger portions 22, the control unit 23 moves appropriate finger portions 22 so that uniform and appropriate external force is applied to each finger portion 22 and thereby it is possible to take a balance of the external force applied to each finger portion 22. Namely, the control unit 23 changes the postures of the finger portions 22 so as to reduce differences among the external force applied to the finger portions 22. With this control, it is possible to effectively reduce the burden of the care receiver.

Next, the robot 100 moves the arms 140 to lift up the care receiver from the bed and allows the care receiver to sit on a wheelchair or the like located next to the bed in advance, for example. As described above, even when the robot 100 lifts up the care receiver from the bed to allow the care receiver to sit on the wheelchair, the control unit 23 moves the appropriate finger portions 22 so as to reduce the differences among the external force applied to the finger portions 22 as needed to take the balance of the external force applied to the five finger portions 22. With this configuration, it is possible to effectively reduce the burden of the care receiver.

The robot 100 as described above includes the manipulator 1. Thus, it is possible to provide the above-described effect of the manipulator 1 and thus it is possible to provide the robot 100 having high reliability.

Hereinbefore, the robot 100 has been described. However, the configuration of the robot 100 is not particularly limited. For example, the number of the arms 140 may be one or three or more. Further, the number of the legs 130 is not also particularly limited and may be three or more. Especially, it is preferable that the robot 100 includes four legs 130 so as to be capable of performing quadrupedal walking. With this configuration, it is possible to suppress the number of the legs 130 and perform stable movement of the robot 100. Further, for example, the robot 100 may take a configuration in which the robot 100 includes wheels (rotating members) instead of the legs 130 and rotates the wheels to move. Further, the robot 100 is not limited to the nursing care robot and may be, for example, a guidance robot for guiding users in a station, an airport, a commercial facility or the like, a delivery robot for delivering food and drink to customers in a restaurant or the like, a carrying robot such as an automated guided vehicle (AGV) for carrying packages in a factory or the like or an industrial robot for manufacturing products in a factory or the like.

### <Twentieth embodiment>

Next, a robot according to a twentieth embodiment of the present invention will be described.

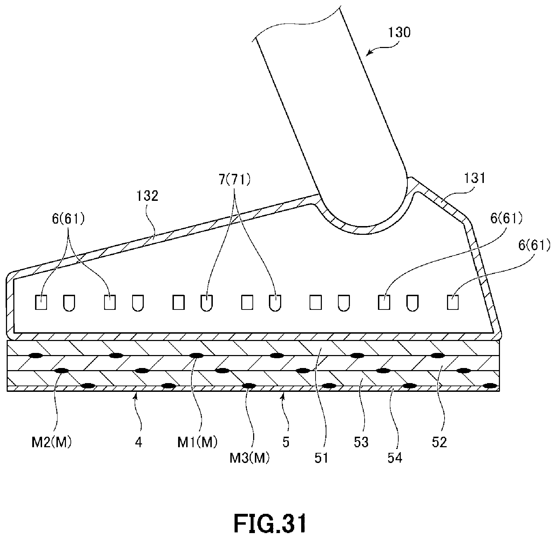

Fig. 31 is a cross-sectional view showing the robot according to the twentieth embodiment of the present invention.

The manipulator 100 according to the present embodiment is the same as the robot 100 of the above-described nineteenth embodiment except that the pressure receiving portion 4 and the detection portion 6 are disposed on the leg portions 130.

In the following description, the robot 100 of the twentieth embodiment will be described with a focus on differences from the above-described nineteenth embodiment and the description for similar particulars will not be given. Further, in Fig. 31, the same components as those in the above-described embodiment are denoted by the same reference numerals and signs.

As shown in Fig. 31, each leg portion 130 includes a foot 131 contacting with the ground. Further, the pressure receiving portion 4 and the detection portion 6 are disposed on this foot 131. Specifically, the foot 131 includes a housing 132 and the elastic layer 5 having the marker M is disposed on a bottom surface of the housing 132. Further, the configuration of the elastic layer 5 is the same as the above-described first embodiment. Further, a plurality of cameras 61 are disposed inside the housing 132 and the detection portion 6 detects the displacement of the marker M from images from these cameras 61 to detect the external force applied to the elastic layer 5. As described above, by providing the elastic layer 5 on the foot 131, it is possible to detect force applied from the ground when the robot 100 walks. Thus, it is possible to detect concavity and convexity of the ground and detect weight shift of the robot 100. Therefore, by feeding back the force received by the elastic layer 5 to the robot control unit 150, it is possible to perform more accurate walking of the robot 100.

In this regard, although the pressure receiving portion 4 and the detection portion 6 are disposed on the foot portion 131, the present invention is not limited thereto. For example, the pressure receiving portion 4 and the detection portion 6 may be disposed on at least a part of the robot 100. For example, the pressure receiving portion 4 and the detection portion 6 may be further disposed on at least one of the body 110, the head 120 and the arm 140. Further, the pressure receiving portion 4 and the detection portion 6 may not be disposed on the foot 131.

### <Twenty-first embodiment>

Next, a robot according to a twenty-first embodiment of the present invention will be described.

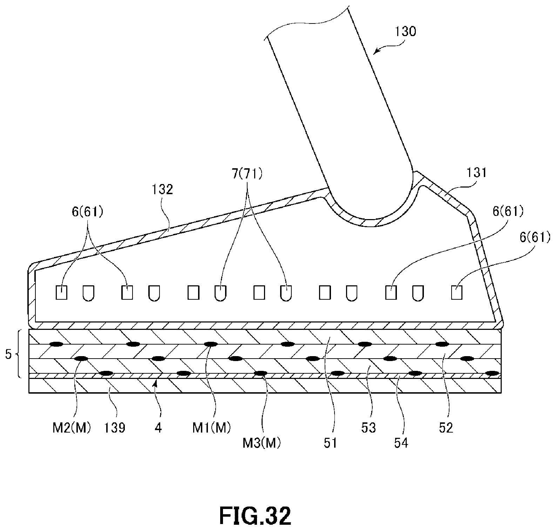

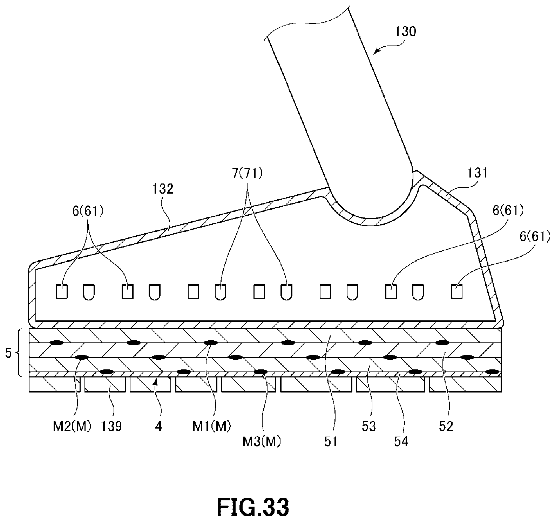

Fig. 32 is a cross-sectional view showing the robot according to the twenty-first embodiment of the present invention. Fig. 33 is another cross-sectional view showing the robot shown in Fig. 32.

The manipulator 100 according to the present embodiment is the same as the robot 100 of the above-described twentieth embodiment except that the configuration of the leg portion 130 is different from that of the above-described twentieth embodiment.

In the following description, the robot 100 of the twenty-first embodiment will be described with a focus on differences from the above-described twentieth embodiment and the description for similar particulars will not be given. Further, in Fig. 32 and Fig. 33, the same components as those in the above-described embodiment are denoted by the same reference numerals and signs.

As shown in Fig. 32, in the present embodiment, the foot 131 includes a cover portion 139 disposed on a lower surface of the elastic layer 5. Due to the cover portion 139, it is possible to prevent the elastic layer 5 from contacting with the ground and thereby it is possible to protect the elastic layer 5.

Further, the cover portion 139 has a hardness (Young's modulus) differing from that of the elastic layer 5. In the present embodiment, the cover portion 139 is configured to be hard enough for allowing the cover portion 139 not to be substantially deformed by the walking of the robot 100. A constituent material for the cover portion 139 is not particularly limited. For example, a variety of resin materials, a variety of metal materials or the like may be used for the cover portion 139. In this regard, the hardness of the cover portion 139 is not particularly limited. The cover portion 139 may be soft in a level allowing the cover portion 139 to be deformed by the walking of the robot 100.

In such a twenty-first embodiment, it is also possible to provide the same effect as that in the above-described twentieth embodiment. In this regard, as shown in Fig. 33, the cover portion 139 may be divided into plural pieces on the lower surface of the foot portion 131. Further, in the case of dividing the cover portion 139 into the plural pieces, the number and the shape of the divided pieces are not particularly limited.

Hereinbefore, although the manipulator and the robot of the present invention have been explained on the basis of the embodiments shown in the drawings in the above description, the present invention is not limited thereto. Further, the configuration of each portion can be replaced by any configuration having the same function. In addition, any other configurations may be added to the invention. In addition, the respective embodiments may be appropriately combined.

Further, although the manipulator is connected to the robot in the above-described embodiments, a target to which the manipulator is connected is not limited to the robot. For example, the manipulator may be connected to a mere frame which does not drive unlike the robot.

### INDUSTRIAL APPLICABILITY

The manipulator of the present invention comprises the pressure receiving portion containing the elastic layer in which the first surface which is the pressure receiving surface and the second surface on the opposite side of the first surface are defined and the marker which is disposed in the elastic layer and displaced in association with the deformation of the elastic layer and the detection portion which is positioned on the side of the second surface of the elastic layer and detects the external force applied to the elastic layer on the basis of the displacement of the marker. In this configuration, the marker is displaced when the elastic layer is deformed in accordance with the external force received by the pressure receiving portion. Thus, it is possible to accurately detect the external force received by the pressure receiving portion by detecting the deformation of the marker with the detection portion. Therefore, it is possible to provide the manipulator and the robot which can smoothly operate by controlling the drive thereof on the basis of the external force detected by the detection portion, for example. For the reasons stated above, the manipulator of the present invention is industrially applicable. In this regard, the same discussion can be applied to the robot of the present invention.

### DESCRIPTION OF REFERENCE SIGNS

- 1: Manipulator
- 100: Robot
- 110: Body
- 120: Head
- 130: Leg
- 131: Foot
- 132: Housing
- 139: Cover portion
- 140: Arm
- 150: Robot control unit
- 21: Base portion
- 22: Finger portion
- 221: Proximal joint portion
- 222: Middle joint portion
- 223: Distal joint portion
- 23: Control unit
- 24: Movable portion
- 3: Housing
- 33: First biasing member
- 34: Second biasing member
- 35: First pressure-sensitive element
- 36: Second pressure-sensitive element
- 4: Pressure receiving portion
- 5: Elastic layer
- 5A: Light-transmissive layer
- 5B: Light reflection layer
- 5B': Inner surface
- 5C: Image display layer
- 5C': Inner surface
- 5a: Outer surface
- 5b: Inner surface
- 51: First elastic layer
- 52: Second elastic layer
- 53: Third elastic layer
- 54: Protective layer
- 6: Detection portion
- 6A: First detection portion
- 6B: Second detection portion
- 6C: Third detection portion
- 61: Camera
- 62: Processing unit
- 62a: CPU
- 62b: Memory
- 62c: Storage unit
- 631: Light source
- 632: Semiconductor position detection element
- 633: Optical system
- 634: Lens system
- 635: Lens system
- 641: Light source
- 642: Lens system
- 643: Beam splitter
- 644: Detector
- 645: Motor
- 646: Optical system
- 651: Light source
- 652: Lens system
- 653: Lens system
- 654: Polarization beam splitter
- 655: λ/4 plate
- 656: Wave-front splitting mirror
- 657: First detector
- 658: Second detector
- 659: Optical system
- 661: Light source
- 662: Slit light formation portion
- 664: Imaging element
- 665: Lens system
- 666: Optical system
- 671: Light source
- 672: Imaging element
- 673: Lattice
- 674: Optical system
- 681: Image projection unit
- 682: Imaging element
- 683: Optical system
- 691: Image projection unit
- 692: Imaging element
- 693: Optical system
- 7: Light source
- 71: Light-emitting portion
- 8: Image projection unit
- A: Arrow
- B: Arrow
- C: Amount of movement
- L: Light
- L1: Light
- L2: Light
- L3: Light
- LS: Light spot
- M: Marker
- M1: First marker
- M2: Second marker
- M3: Third marker
- M4: Reference marker
- M5: Exposed marker
- M6: Ring marker
- M7: Linear marker
- M8: Linear marker
- Ma: Linear portion
- Mb: Block portion
- S: Internal space
- X: Care receiver
- Z: Amount of relative displacement

## Claims

1. A manipulator, comprising:
a pressure receiving portion containing an elastic layer in which a first surface which is a pressure receiving surface and a second surface on an opposite side of the first surface are defined and a marker which is disposed in the elastic layer and displaced in association with deformation of the elastic layer; and
a detection portion which is positioned on the side of the second surface of the elastic layer and detects external force applied to the elastic layer on the basis of displacement of the marker.

2. The manipulator as claimed in claim 1, wherein the marker contains a first marker and a second marker which are disposed so as to be shifted in a thickness direction of the elastic layer with each other.

3. The manipulator as claimed in claim 2, wherein the elastic layer includes a first elastic layer having the first marker and a second elastic layer which is disposed on the first elastic layer and has the second marker.

4. The manipulator as claimed in claim 2 or 3, wherein the first marker and the second marker are different from each other in at least one of shape and hue.

5. The manipulator as claimed in any one of claims 1 to 4, wherein the marker contains an exposed marker which is exposed on the first surface.

6. The manipulator as claimed in any one of claims 1 to 5, wherein the pressure receiving portion includes a reference marker which is not displaced due to the deformation of the elastic layer and can be detected by the detection portion.

7. The manipulator as claimed in any one of claims 1 to 6, wherein the detection portion includes a photographing portion for photographing the marker and detects the displacement of the marker on the basis of image data of the marker photographed by the photographing portion.

8. The manipulator as claimed in any one of claims 1 to 7, wherein the detection portion detects the displacement of the marker using a stereo photographic method.

9. The manipulator as claimed in any one of claims 1 to 8, further comprising a support portion which supports the elastic layer from the side of the second surface.

10. The manipulator as claimed in claim 9, further comprising a movable portion which can be displaced with respect to the support portion and a pressure-sensitive element which can detect external force applied to the movable portion.

11. The manipulator as claimed in any one of claims 1 to 10, further comprising:
a base portion, and
a finger portion which is connected to the base portion and can be displaced with respect to the base portion,
wherein the pressure receiving portion is disposed on at least a tip end portion of the finger portion.

12. The manipulator as claimed in any one of claims 1 to 11, wherein the marker includes a linear portion having a linear shape and a block portion disposed on the linear portion and having a width wider than a wide of the linear portion, and
wherein a Young's modulus of the block portion is higher than a Young's modulus of the linear portion.

13. A robot, comprising:
the manipulator defined by any one of claims 1 to 12.

14. A robot, comprising:
a pressure receiving portion containing an elastic layer in which a first surface which is a pressure receiving surface and a second surface on an opposite side of the first surface are defined and a marker which is disposed in the elastic layer and displaced in association with deformation of the elastic layer; and
a detection portion which is positioned on the side of the second surface of the elastic layer and detects external force applied to the elastic layer on the basis of displacement of the marker.
